# EUROPEAN PATENT APPLICATION

(11) **EP 4 287 667 A1**
(43) Date of publication of application: **06.12.2023**
(21) Application number: 22745080.6
(22) Date of filing: 17.01.2022
(51) Int. Cl.: H04W 4/70, H04W 52/02

(54) **INFORMATION INDICATION METHOD AND APPARATUS, AND TERMINAL**

(30) Priority: 01.02.2021 CN 202110139641
(71) Applicant: Datang Mobile Communications Equipment Co., Ltd., Beijing 100085 (CN)
(72) Inventor: ZHAO, Yali, Beijing 100085 (CN); ZHANG, Huiying, Beijing 100085 (CN)
(74) Representative: Studio Torta S.p.A.
(86) International application number: PCT/CN2022/072398
(87) International publication number: WO 2022/161204

(57) **Abstract**

Provided are an information indication method and apparatus, and a terminal. The method includes: transmitting indication information by a first terminal at a target position. The indication information is used for indicating at least one of following information: whether a second terminal needs to enter a DRX active time; whether the second terminal needs to enter a DTX active time; whether the second terminal needs to perform a DRX configuration change; whether the second terminal needs to perform a DTX configuration change; identification information of a DRX configuration for the second terminal to be used after the DRX configuration is changed; identification information of a DTX configuration for the second terminal to be used after the DTX configuration is changed.

## Description

### CROSS-REFERENCE TO RELATED APPLICATION

The present application claims a priority to the Chinese patent application No. 202110139641.5 filed in China on February 1, 2021, a disclosure of which is incorporated herein by reference in its entirety.

### TECHNICAL FIELD

The present disclosure relates to the field of communications technologies, in particular to an information indication method, an information indication apparatus, and a terminal.

### BACKGROUND

In conventional cellular network communications, transmissions of uplink/downlink data and control information between a terminal and a network-side device are performed through a user equipment-evolved universal terrestrial radio access network (User Equipment-Evolved Universal Terrestrial Radio Access Network, Uu) interface. To reduce power consumption, cellular network communication systems adopt a discontinuous reception (Discontinuous Reception, DRX) operation mode. Under this mode, the terminal monitors a control channel periodically, so as to save power.

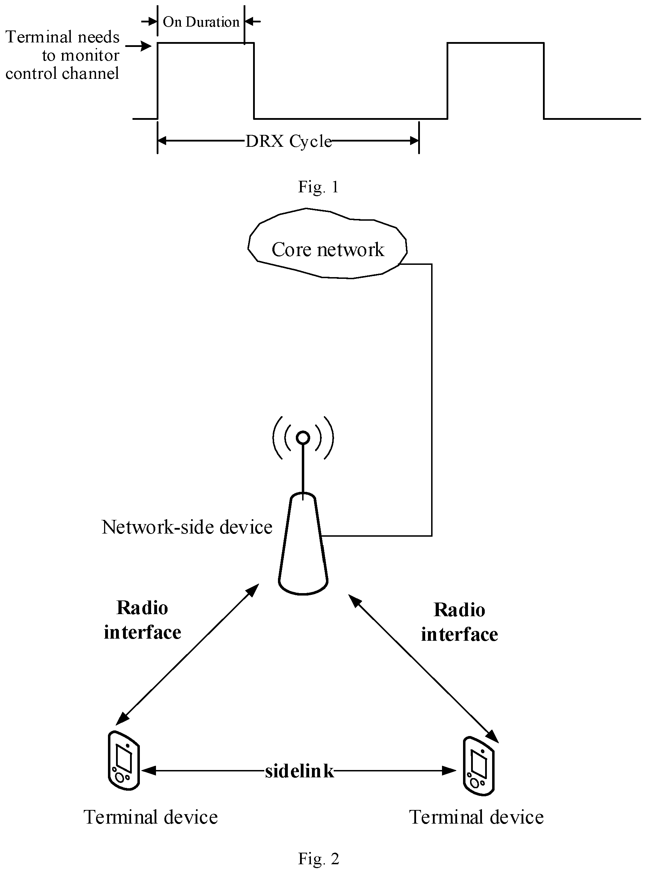

A basic principle of DRX is as shown in Fig. 1, where the On duration (On duration) represents a time period in which the terminal monitors the control channel. During the On duration, a radio frequency channel of the terminal is on and the terminal continuously monitors the control channel. During a time period apart from the On duration, the terminal is in a sleep status, the radio frequency channel thereof is off, and the terminal no longer monitors the control channel, to save power. The On duration occurs in cycle (Cycle), and a specific cycle thereof is configured on a network side.

Direct communication refers to a communication mode in which data transmissions may be performed between terminals close to each other through a sidelink (Sidelink, SL). The wireless interface corresponding to SL is referred to as a sidelink interface, which may also be called Sidelink interface or PC5 interface (PC5 interface).

However, at present there is only a set of long DRX (long DRX) configurations for DRX of the sidelink interface. No matter what kind of traffic is arriving at the sidelink interface, a terminal in sidelink communication always uses the set of DRX configurations, which cannot meet the latency requirements of different kinds of traffics and degrades user experience.

### SUMMARY

Embodiments of the present disclosure are directed to providing an information indication method, an information indication apparatus, and a terminal, to solve the problem that the DRX configuration of the sidelink interface in the related art cannot meet the latency requirements of different kinds of traffics.

To solve the aforementioned problem, the present disclosure provides, in an embodiment, an information indication method, including:
transmitting, by a first terminal, indication information at a target position of a sidelink resource, where the indication information is used for indicating at least one of following information:
whether a second terminal needs to enter a discontinuous reception (DRX) active time;
whether the second terminal needs to enter a discontinuous transmission (DTX) active time;
whether the second terminal needs to perform a DRX configuration change;
whether the second terminal needs to perform a DTX configuration change;
identification information of a DRX configuration for the second terminal to be used after the DRX configuration is changed; or
identification information of a DTX configuration for the second terminal to be used after the DTX configuration is changed;
where the second terminal is communicating with the first terminal through a sidelink interface.

Optionally, prior to the transmitting, by the first terminal, the indication information at the target position of the sidelink resource, the method further includes:
determining the target position by the first terminal, according to a predetermined protocol; or,
determining the target position by the first terminal, according to target position indication information transmitted by the second terminal and received through a sidelink interface.

Optionally, prior to the transmitting, by the first terminal, the indication information at the target position of the sidelink resource, the method further includes:
determining the target position by the first terminal, according to a terminal implementation requirement; or,
determining the target position by the first terminal, according to a radio resource control (RRC) state of the first terminal at a Uu interface.

Optionally, the determining the target position by the first terminal, according to the RRC state of the first terminal at the Uu interface includes:
determining the target position by the first terminal, according to target position indication information transmitted by a network-side device and received through the Uu interface, in the case that the first terminal is in an RRC connected state at the Uu interface; or,
determining the target position by the first terminal, according to a system information block transmitted by the network-side device and received through the Uu interface, in the case that the first terminal is in an RRC idle state or RRC inactive state at the Uu interface, where the system information block carries the target position indication information; or,
determining the target position by the first terminal, according to pre-configured information, in the case that the first terminal is in an RRC out-of-coverage state at the Uu interface.

Optionally, subsequent to the transmitting, by the first terminal, the indication information at the target position of the sidelink resource, the method further includes at least one of following:
activating, by the first terminal, a DRX inactivity timer or a DTX inactivity timer corresponding to a sidelink interface, in the case that the indication information indicates that the second terminal needs to enter the DRX active time or the DTX active time;
performing, by the first terminal, the DRX configuration change or the DTX configuration change, in the case that the indication information indicates that the second terminal needs to perform the DRX configuration change or the DTX configuration change; or
changing, by the first terminal, to the DRX configuration or the DTX configuration indicated by the identification information, in the case that the indication information indicates the identification information of the DRX configuration for the second terminal to be used after the DRX configuration is changed, or the identification information of the DTX configuration for the second terminal to be used after the DTX configuration is changed.

Optionally, the transmitting, by the first terminal, the indication information at the target position of the sidelink resource includes:
transmitting, by the first terminal, the indication information at the target position of the sidelink resource in the case that the first terminal is in a DRX inactive time or DTX inactive time.

Optionally, the method further includes:
transmitting, by the first terminal, enabling status information to the second terminal through the sidelink interface, in the case that the first terminal is in the DRX active time or DTX active time; or,
receiving, by the first terminal, enabling status information transmitted by the second terminal through the sidelink interface, in the case that the first terminal is in the DRX active time or DTX active time;
where the enabling status information is used for indicating an operation status of an enabling switch, and the operation status of the enabling switch includes: an enabled status or a disabled status.

Optionally, the transmitting, by the first terminal, the indication information at the target position of the sidelink resource includes: transmitting, by the first terminal, the indication information at the target position of the sidelink resource, in the case that the enabling status information indicates that the operation status of the enabling switch is the enabled status.

Optionally, prior to the transmitting, by the first terminal, the enabling status information to the second terminal through the sidelink interface, the method further includes: determining the enabling status information by the first terminal, according to a terminal implementation requirement; or, determining the enabling status information by the first terminal, according to an RRC state of the first terminal at a Uu interface.

Optionally, the determining the enabling status information by the first terminal, according to the RRC state of the first terminal at the Uu interface includes:
obtaining, by the first terminal, the enabling status information transmitted by a network-side device through the Uu interface, in the case that the first terminal is in an RRC connected state at the Uu interface; or,
receiving, by the first terminal through the Uu interface, a system information block transmitted by the network-side device, and determining, by the first terminal, the enabling status information according to enabling status information carried in the system information block, in the case that the first terminal is in an RRC idle state or RRC inactive state at the Uu interface; or,
determining, by the first terminal according to pre-configured information, the enabling status information, in the case that the first terminal is in an RRC out-of-coverage state at the Uu interface.

The present disclosure further provides, in an embodiment, an information indication method, including:
monitoring, by a second terminal at a target position of a sidelink resource, indication information transmitted by a first terminal;
in the case that the monitored indication information indicates that the second terminal needs to enter a DRX active time or a DTX active time, activating, by the second terminal, a DRX inactivity timer or a DTX inactivity timer corresponding to a sidelink interface;
in the case that the monitored indication information indicates that the second terminal needs to perform a DRX configuration change or a DTX configuration change, performing, by the second terminal, the DRX configuration change or the DTX configuration change; or
in the case that the monitored indication information indicates identification information of a DRX configuration for the second terminal to be used after the DRX configuration is changed, or identification information of a DTX configuration for the second terminal to be used after the DTX configuration is changed, changing, by the second terminal, to the DRX configuration or the DTX configuration indicated by the identification information;
where the first terminal is communicating with the second terminal through the sidelink interface.

Optionally, prior to the monitoring, by the second terminal at the target position of the sidelink resource, the indication information transmitted by the first terminal, the method further includes: determining the target position by the second terminal, according to a predetermined protocol; or, determining the target position by the second terminal, according to target position indication information transmitted by the first terminal and received through the sidelink interface.

Optionally, prior to the monitoring, by the second terminal at the target position of the sidelink resource, the indication information transmitted by the first terminal, the method further includes: determining the target position by the second terminal, according to a terminal implementation requirement; or, determining the target position by the second terminal, according to a radio resource control (RRC) state of the second terminal at a Uu interface.

Optionally, the determining the target position by the second terminal, according to the RRC state of the second terminal at the Uu interface includes:
determining the target position by the second terminal, according to target position indication information transmitted by a network-side device and received through the Uu interface, in the case that the second terminal is in an RRC connected state at the Uu interface; or,
determining the target position by the second terminal, according to a system information block transmitted by the network-side device and received through the Uu interface, in the case that the second terminal is in an RRC idle state or RRC inactive state at the Uu interface, where the system information block carries the target position indication information; or,
determining the target position by the second terminal, according to pre-configured information, in the case that the second terminal is in an RRC out-of-coverage state at the Uu interface.

Optionally, the monitoring, by the second terminal at the target position of the sidelink resource, the indication information transmitted by the first terminal includes: monitoring, by the second terminal at the target position of the sidelink resource, the indication information transmitted by the first terminal, in the case that the second terminal is in a DRX inactive time or DTX inactive time.

Optionally, the method further includes: transmitting, by the second terminal, enabling status information to the first terminal through the sidelink interface, in the case that the second terminal is in the DRX active time or DTX active time; or, receiving, by the second terminal, enabling status information transmitted by the first terminal through the sidelink interface, in the case that the second terminal is in the DRX active time or DTX active time; where the enabling status information is used for indicating an operation status of an enabling switch, and the operation status of the enabling switch includes: an enabled status or a disabled status.

Optionally, the monitoring, by the second terminal at the target position of the sidelink resource, the indication information transmitted by the first terminal includes: monitoring, by the second terminal at the target position of the sidelink resource, the indication information transmitted by the first terminal, in the case that the enabling status information indicates that the operation status of the enabling switch is the enabled status.

Optionally, prior to the transmitting, by the second terminal, the enabling status information to the first terminal through the sidelink interface, the method further includes: determining the enabling status information by the second terminal, according to a terminal implementation requirement; or, determining the enabling status information by the second terminal, according to an RRC state of the second terminal at a Uu interface.

Optionally, the determining the enabling status information by the second terminal, according to the RRC state of the second terminal at the Uu interface includes:
obtaining, by the second terminal, the enabling status information transmitted by a network-side device through the Uu interface, in the case that the second terminal is in an RRC connected state at the Uu interface; or,
determining the enabling status information by the second terminal, according to a system information block transmitted by the network-side device and received through the Uu interface, in the case that the second terminal is in an RRC idle state or RRC inactive state at the Uu interface, where the system information block carries the enabling status information; or,
determining the enabling status information by the second terminal, according to pre-configured information, in the case that the second terminal is in an RRC out-of-coverage state at the Uu interface.

The present disclosure further provides, in an embodiment, an information indication apparatus, applied to a first terminal, including:
a first transmitting unit, configured to transmit indication information at a target position of a sidelink resource, where the indication information is used for indicating at least one of following information:
whether a second terminal needs to enter a DRX active time;
whether the second terminal needs to enter a DTX active time;
whether the second terminal needs to perform a DRX configuration change;
whether the second terminal needs to perform a DTX configuration change;
identification information of a DRX configuration for the second terminal to be used after the DRX configuration is changed; or
identification information of a DTX configuration for the second terminal to be used after the DTX configuration is changed;
where the second terminal is communicating with the first terminal through a sidelink interface.

The present disclosure further provides, in an embodiment, a terminal, the terminal being a first terminal, and including a memory, a transceiver and a processor, where the memory is configured to store a computer program, the transceiver is configured to transmit and receive data under the control of the processor, and the processor is configured to read the computer program from the memory to implement:
transmitting indication information at a target position of a sidelink resource, where the indication information is used for indicating at least one of following information:
whether a second terminal needs to enter a DRX active time;
whether the second terminal needs to enter a DTX active time;
whether the second terminal needs to perform a DRX configuration change;
whether the second terminal needs to perform a DTX configuration change;
identification information of a DRX configuration for the second terminal to be used after the DRX configuration is changed; or
identification information of a DTX configuration for the second terminal to be used after the DTX configuration is changed;
where the second terminal is communicating with the first terminal through a sidelink interface.

The present disclosure further provides, in an embodiment, an information indication apparatus, applied to a second terminal, including:
a monitoring unit, configured to monitor, at a target position of a sidelink resource, indication information transmitted by a first terminal;
a processing unit, configured to: in the case that the monitored indication information indicates that the second terminal needs to enter a DRX active time or a DTX active time, activate a DRX inactivity timer or a DTX inactivity timer corresponding to a sidelink interface; or configured to: in the case that the monitored indication information indicates that the second terminal needs to perform a DRX configuration change or a DTX configuration change, perform the DRX configuration change or the DTX configuration change; or configured to: in the case that the monitored indication information indicates identification information of a DRX configuration for the second terminal to be used after the DRX configuration is changed or identification information of a DTX configuration for the second terminal to be used after the DTX configuration is changed, change to the DRX configuration or the DTX configuration indicated by the identification information;
where the first terminal is communicating with the second terminal through the sidelink interface.

The present disclosure further provides, in an embodiment, a terminal, the terminal being a second terminal, and including a memory, a transceiver and a processor, where the memory is configured to store a computer program, the transceiver is configured to transmit and receive data under the control of the processor, and the processor is configured to read the computer program from the memory to implement:
monitoring, at a target position of a sidelink resource, indication information transmitted by a first terminal;
in the case that the monitored indication information indicates that the second terminal needs to enter a DRX active time or a DTX active time, activating a DRX inactivity timer or a DTX inactivity timer corresponding to a sidelink interface;
in the case that the monitored indication information indicates that the second terminal needs to perform a DRX configuration change or a DTX configuration change, performing the DRX configuration change or the DTX configuration change;
in the case that the monitored indication information indicates identification information of a DRX configuration for the second terminal to be used after the DRX configuration is changed or identification information of a DTX configuration for the second terminal to be used after the DTX configuration is changed, changing to the DRX configuration or the DTX configuration indicated by the identification information;
where the first terminal is communicating with the second terminal through the sidelink interface.

The present disclosure further provides, in an embodiment, a processor-readable storage medium storing a computer program, where the computer program is configured to be executed by a processor to implement the aforementioned methods.

The foregoing technical solution of the present disclosure has at least the following beneficial effects.

According to the information indication method and apparatus and the terminal in the embodiments of the present disclosure, a terminal in sidelink communication transmits or monitors indication information at the target position, and determines, according to the indication information, whether to enter the DRX or DTX active time, or determines, according to the indication information, whether to perform the DRX or DTX configuration change, so as to achieve a flexible change of DRX or DTX configuration, and reduce the latency in setting up a sidelink radio bearer, thereby improving user experience.

### BRIEF DESCRIPTION OF THE DRAWINGS

Fig. 1 is a schematic diagram of basic principles of DRX;
Fig. 2 is a block diagram of a wireless communication system to which embodiments of the present disclosure are applicable;
Fig. 3 is a flow diagram showing steps of an information indication method according to an embodiment of the present disclosure;
Fig. 4 is another flow diagram showing steps of an information indication method according to an embodiment of the present disclosure;
Fig. 5 is a schematic interaction diagram showing example 1 of an information indication method according to an embodiment of the present disclosure;
Fig. 6 is a schematic interaction diagram showing example 2 of an information indication method according to an embodiment of the present disclosure;
Fig. 7 is a schematic interaction diagram showing example 3 of an information indication method according to an embodiment of the present disclosure;
Fig. 8 is a schematic structural diagram of an information indication apparatus according to an embodiment of the present disclosure;
Fig. 9 is a schematic structural diagram of a terminal according to an embodiment of the present disclosure;
Fig. 10 is another schematic structural diagram of an information indication apparatus according to an embodiment of the present disclosure; and
Fig. 11 is another schematic structural diagram of a terminal according to an embodiment of the present disclosure.

### DETAILED DESCRIPTION

In order to make the technical problem to be solved, the technical solutions and advantages of the present disclosure clearer, specific embodiments will be described in detail below with reference to the drawings.

Fig. 2 is a block diagram of a wireless communication system to which embodiments of the present disclosure are applicable. The wireless communication system includes terminal devices and a network-side device. Adjacent terminals in proximity to each other may conduct data transmissions therebetween through SL, and a terminal and the network-side device perform data transmissions therebetween through a Uu interface. The terminal device may also be called a terminal or user equipment (User Equipment, UE). It is noted, a specific type of the terminal is not limited in embodiments of the present disclosure. The network-side device may be a base station, a core network, a central unit (Central Unit, CU) or a distributed unit (Distributed Unit, DU). It is noted, although a base station in a New Radio (New Radio, NR) system is used exemplarily in embodiments of the present disclosure, the specific type of the base station is not limited thereto.

It is understood, the term "and/or" as used herein merely refers to an association relationship between objects to be associated and means there are three possibilities. For example, A and/or B may represent: only A exists, both A and B exist, and only B exists. Additionally, the symbol "/" as used herein generally represents there is a "or" relationship between the objects to be associated.

The term "multiple" used herein refers to two or more, and other quantifiers are similar thereto.

In the following, technical solutions in embodiments of the present disclosure will be described in a clear and thorough manner with reference to the drawings related to the embodiments. Obviously, the described embodiments are merely a part of, rather than all of, the embodiments of the present disclosure. Based on the embodiments of the present disclosure, a person skilled in the art may, without any creative effort, obtain other embodiments, which also fall within the scope of the present disclosure.

The solution provided by the embodiments of the present disclosure may be applicable to multiple kinds of systems, especially a 5th generation (5th Generation, 5G) system. For example, an applicable system may be a global system of mobile communication (global system of mobile communication, GSM) system, a code division multiple access (code division multiple access, CDMA) system, a wideband code division multiple access (Wideband Code Division Multiple Access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a long term evolution advanced (long term evolution advanced, LTE-A) system, a universal mobile telecommunication system (universal mobile telecommunication system, UMTS), a worldwide interoperability for microwave access (worldwide interoperability for microwave access, WiMAX) system, a 5G New Radio (New Radio, NR) system, or the like. All of the multiple kinds of systems include a terminal device and a network device. The systems may include a core network portion as well, for example, evolved packet system (Evolved Packet System, EPS), 5G system (5G System, 5GS) or the like.

The terminal involved in the embodiments of the present disclosure may be a device that provides voice and/or data connectivity to a user, a handheld device with a radio connection function, or other processing devices connected to a wireless modem or the like. In different systems, the names of terminal devices may be different. For example, in a 5G system, a terminal device may be called user equipment (User Equipment, UE). Wireless terminal device can communicate with one or more core networks (Core Network, CNs) via a radio access network (Radio Access Network, RAN), and wireless terminal device may be mobile terminal device, such as mobile phones (or called "cellular" phones) and computers with mobile terminal device, such as portable, pocket-sized, hand-held, computer built-in or vehicle-mounted mobile apparatuses, which exchange voice and/or data with the radio access network. For example, personal communication service (Personal Communication Service, PCS) phones, cordless phones, session initiated protocol (Session Initiated Protocol, SIP) phones, wireless local loop (Wireless Local Loop, WLL) stations, personal digital assistant (Personal Digital Assistant, PDA), and other devices. The wireless terminal device may also be called a system, subscriber unit, subscriber station, mobile station, mobile, remote station, access point, remote terminal, access terminal, user terminal, user agent, and user device, which are not limited in the embodiments of the present disclosure.

The network device involved in the embodiments of the present disclosure may be a base station. The base station may include multiple cells that provide services to terminals. Depending on the specific application scenario, the base station may be called access point, or may be a device in the access network that communicates over an air interface with wireless terminal devices through one or more sectors, or may be called other name. The network device may be used for converting the received radio frames into Internet protocol (Internet Protocol, IP) packets or vice versa, and serves as a router between the wireless terminal devices and the rest of the access network. The rest of the access network may include an IP communication network. The network device may also coordinate the attribute management of the air interface. For example, the network device involved in the embodiments of the present disclosure may be a base transceiver station (Base Transceiver Station, BTS) in the global system for mobile communications (Global System for Mobile communications, GSM) or code division multiple access (Code Division Multiple Access, CDMA), a NodeB in the wide-band code division multiple access (Wide-band Code Division Multiple Access, WCDMA), an evolved Node B (eNB or e-NodeB) in Long Term Evolution (long term evolution, LTE) system, a 5G base station (gNB) in 5G network architecture (next generation system), a home evolved Node B (Home evolved Node B, HeNB), a relay node, a femto, a pico, or the like, which is not limited herein. In some network architectures, the network device may include a centralized unit (CU) node and a distributed unit (DU) node, which may be geographically separated.

The network device and the terminal device may each perform multi-input multi-output (Multi Input Multi Output, MIMO) transmission with each other by using one or more antennas. The MIMO transmission may be single user MIMO (Single User MIMO, SU-MIMO) or multiple user MIMO (Multiple User MIMO, MU-MIMO). According to the configuration and quantity of antenna combinations, the MIMO transmission may be two dimensional-MIMO (2 Dimension MIMO, 2D-MIMO), three dimensional-MIMO (3 Dimension MIMO, 3D-MIMO), full dimensional-MIMO (Full Dimension MIMO, FD-MIMO) or massive-MIMO (massive-MIMO), and may be diversity transmission, precoded transmission, beam forming transmission, or the like.

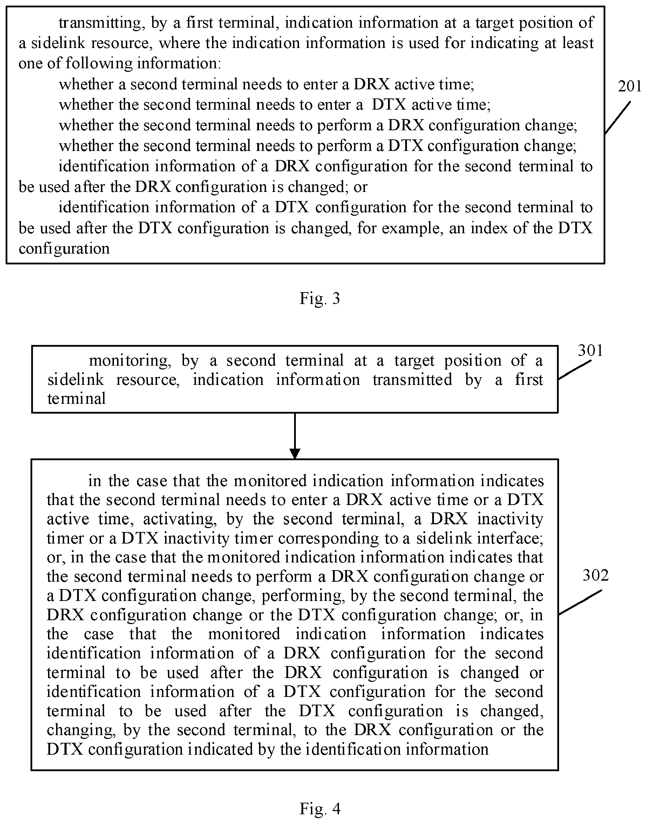

As shown in Fig. 3, an embodiment of the present disclosure provides an information indication method, including:
a step 201, transmitting, by a first terminal, indication information at a target position of a sidelink resource, where the indication information is used for indicating at least one of following information:
whether a second terminal needs to enter a discontinuous reception (DRX) active time (Active Time);
whether the second terminal needs to enter a discontinuous transmission (DTX) active time;
whether the second terminal needs to perform a DRX configuration change;
whether the second terminal needs to perform a DTX configuration change;
identification information of a DRX configuration for the second terminal to be used after the DRX configuration is changed, for example, an index of the DRX configuration; or
identification information of a DTX configuration for the second terminal to be used after the DTX configuration is changed, for example, an index of the DTX configuration;
where the second terminal is communicating with the first terminal through a sidelink interface.

In an embodiment of the present disclosure, the indication information may further include: a sidelink source address (i.e., the address of a terminal transmitting data) and a sidelink destination address (i.e., the address of a terminal receiving data).

In the embodiments of the present disclosure, due to the indication of the indication information, the first terminal and the second terminal may enter the active time synchronously, or the DRX configuration/DTX configuration of the first terminal and the second terminal may be changed synchronously, so as to meet the latency requirements of different kinds of traffics and improve user experience.

It is noted, in sidelink communication, the first terminal may serve as a data transmitting terminal or a data receiving terminal; likewise, the second terminal may serve as a data receiving terminal or a data transmitting terminal. When the first terminal is the data transmitting terminal, the second terminal is the data receiving terminal; in this case, the indication information transmitted by the data transmitting terminal is used for indicating at least one of following information:
whether the second terminal needs to enter a DRX active time;
whether the second terminal needs to perform a DRX configuration change; or
identification information of a DRX configuration for the second terminal to be used after the DRX configuration is changed.

When the first terminal is the data receiving terminal, the second terminal is the data transmitting terminal; in this case, the indication information transmitted by the data receiving terminal is used for indicating at least one of following information:
whether the second terminal needs to enter a DTX active time;
whether the second terminal needs to perform a DTX configuration change; or
identification information of a DTX configuration for the second terminal to be used after the DTX configuration is changed.

It is noted, the first terminal may achieve the DRX/DTX configuration change in consideration of service requirements by means of the indication information transmitted at the target position of the sidelink resource. For example, the first terminal transmits the indication information in the DRX active time or DTX active time, and with the indication information, two terminals communicating in a sidelink interface may perform a configuration change from the active state to the inactive state; for another example, the first terminal transmits the indication information in a DRX inactive time or DTX inactive time, and with the indication information, two terminals communicating in a sidelink interface may perform a configuration change from the inactive state to the active state. In this way, the latency in setting up a sidelink radio bearer is reduced, thereby improving user experience.

Optionally, in at least one embodiment of the present disclosure, the step 201 includes: transmitting, by the first terminal, the indication information at the target position of the sidelink resource, in the case that the first terminal is in a DRX inactive time or DTX inactive time.

Further, optionally, in the case that the first terminal is in a DTX inactive time, and latency-sensitive traffics arrive at the sidelink interface, the first terminal transmits the indication information at the target position of the sidelink resource; under this circumstance, the indication information is used for indicating that the second terminal needs to enter the DRX active time, such that the terminal communicating in a sidelink interface may switch from the DRX inactive time to the DRX active time rapidly.

It is noted, the active time in DRX or DTX is defined as follows.

The active time in DRX or DTX is the time when the terminal monitors a control channel (e.g., physical sidelink control channel (Physical SideLink Control Channel, PSCCH) over the sidelink interface) or other channel carrying control information (e.g., physical sidelink shared channel (Physical SideLink Shared Channel, PSSCH) carrying sidelink control information (Sidelink Control Information, SCI) over the sidelink interface). In general, the terminal needs to monitor the control channel or other channel carrying control information as long as one of the following timers is running:
drx-on Duration Timer;
drx-Inactivity Timer;
drx-Retransmission Timer;
dtx-on Duration Timer;
dtx-Inactivity Timer;
dtx-Retransmission Timer.

In at least one embodiment of the present disclosure, the first terminal needs to determine the target position prior to transmitting the indication information at the target position of the sidelink resource. The manner in which the target position is determined includes, but is not limited to:
determining the target position by the first terminal, according to a predetermined protocol; or,
determining the target position by the first terminal, according to target position indication information transmitted by the second terminal and received through the sidelink interface. For example, the second terminal transmits the target position indication information to the first terminal via a PC5-RRC reconfiguration signaling.

As an optional embodiment, the first terminal determines the target position before transmitting the indication information at the target position of the sidelink resource. The manner in which the target position is determined by the first terminal includes:
determining the target position by the first terminal according to a terminal implementation requirement; or,
determining the target position by the first terminal according to an RRC state of the first terminal at a Uu interface.

Optionally, the determining the target position by the first terminal according to the RRC state of the first terminal at the Uu interface includes:
determining the target position by the first terminal, according to target position indication information transmitted by a network-side device and received through the Uu interface, in the case that the first terminal is in an RRC connected state at the Uu interface; for example, the network-side device transmits the target position indication information to the first terminal by means of a Uu interface dedicated signaling; or,
determining the target position by the first terminal according to a system information block transmitted by the network-side device and received through the Uu interface, in the case that the first terminal is in an RRC idle state or RRC inactive state at the Uu interface, where the system information block carries the target position indication information; or,
determining the target position by the first terminal according to pre-configured information, in the case that the first terminal is in an RRC out-of-coverage state at the Uu interface.

Correspondingly, as an optional embodiment, subsequent to the step 201, the method further includes at least one of following:
activating, by the first terminal, a DRX inactivity timer or a DTX inactivity timer corresponding to a sidelink interface, in the case that the indication information indicates that the second terminal needs to enter the DRX active time or the DTX active time;
performing, by the first terminal, the DRX configuration change or the DTX configuration change, in the case that the indication information indicates that the second terminal needs to perform the DRX configuration change or the DTX configuration change; or
changing, by the first terminal, to the DRX configuration or the DTX configuration indicated by the identification information, in the case that the indication information indicates the identification information of the DRX configuration for the second terminal to be used after the DRX configuration is changed or the identification information of the DTX configuration for the second terminal to be used after the DTX configuration is changed.

In at least one embodiment of the present disclosure, an enabling (enable/disable) mechanism is introduced with respect to the transmission of indication information. Upon determination of enabling status information (enable/disable), one terminal in sidelink communication may notify the opposite terminal in the sidelink communication of the enabling status information through the sidelink interface.

In the case that the enabling mechanism is implemented, in at least one embodiment of the present disclosure, the method further includes:
transmitting, by the first terminal, enabling status information to the second terminal through the sidelink interface, in the case that the first terminal is in the DRX active time or DTX active time; or,
receiving, by the first terminal, enabling status information transmitted by the second terminal through the sidelink interface, in the case that the first terminal is in the DRX active time or DTX active time;
where the enabling status information is used for indicating an operation status of an enabling switch, and the operation status of the enabling switch includes: an enabled status or a disabled status.

It is noted, when the operation status of the enabling switch is the enabled status, the first terminal transmits the indication information at the target position, and the second terminal monitors the indication information at the target position; when the operation status of the enabling switch is the disabled status, the first terminal stops transmitting the indication information at the target position or the first terminal does not transmit the indication information at the target position, and the second terminal stops monitoring the indication information at the target position or the second terminal does not monitor the indication information at the target position.

For example, after determining that the operation status of the enabling switch is the enabled status, the first terminal transmits the enabling status information to the second terminal, such that the second terminal also places its enabling switch into the enabled status upon receiving the enabling status information. In this way, the first terminal transmits the indication information at the target position, and correspondingly, the second terminal monitors the indication information at the target position.

For another example, after determining that the operation status of the enabling switch is the disabled status, the first terminal will not transmit the indication information at the target position. In addition, the first terminal may further transmit the enabling status information to the second terminal, such that the second terminal also places its enabling switch into the disabled status upon receiving the enabling status information. In this way, the second terminal will not monitor the indication information at the target position.

Specifically, the first terminal determines that the operation status of the enabling switch is the enabled status; firstly, the first terminal transmits the enabling status information to the second terminal, then the first terminal transmits the indication information at the target position; correspondingly, the second terminal monitors the indication information at the target position. After the execution of service, if the first terminal changes the operation status of the enabling switch to the disabled status (it is noted, that the first terminal changes the operation status of the enabling switch may be triggered by the first terminal itself, or may be triggered by the received enabling status information which is transmitted by the second terminal), the first terminal does not transmit the indication information at the target position. If the first terminal itself triggers the change of the operation status of the enabling switch, the first terminal transmits the enabling status information to the second terminal, such that the second terminal changes the operation status of its enabling switch to the disabled status upon receiving the enabling status information, and subsequently the second terminal does not monitor the indication information at the target position.

For still another example, when determining that the operation status of the enabling switch is the disabled status, the first terminal will not transmit the indication information at the target position. If the first terminal determines that the operation status of the enabling switch should be the enabled state according to the service processing requirements or the received status change information which is transmitted by the second terminal, the first terminal changes the operation status of the enabling switch from the disabled status to the enabled status. If the first terminal changes the operation status of the enabling switch according to the service processing requirements, the first terminal transmits the enabling status information to the second terminal, such that the operation status of the enabling switch of the second terminal is also the enabled status. In this way, the first terminal subsequently transmits the indication information at the target position, and correspondingly, the second terminal monitors the indication information at the target position.

Before transmitting the enabling status information to the second terminal through the sidelink interface, the first terminal should firstly determine the enabling status information. The manner in which the enabling status information is determined includes: determining the enabling status information by the first terminal according to a terminal implementation requirement; or, determining the enabling status information by the first terminal according to an RRC state of the first terminal at a Uu interface.

Optionally, in at least one embodiment of the present disclosure, the determining, by the first terminal according to the RRC state of the first terminal at the Uu interface, the enabling status information includes:
obtaining, by the first terminal, the enabling status information transmitted by a network-side device through the Uu interface, in the case that the first terminal is in an RRC connected state at the Uu interface; for example, the network-side device transmits to the first terminal the corresponding enabling status information through a Uu interface dedicated signaling; or,
determining the enabling status information by the first terminal, according to a system information block transmitted by the network-side device and received through the Uu interface, in the case that the first terminal is in an RRC idle state or RRC inactive state at the Uu interface, where the system information block carries the enabling status information; or,
determining the enabling status information by the first terminal according to pre-configured information, in the case that the first terminal is in an RRC out-of-coverage state at the Uu interface.

In summary, in embodiments of the present disclosure, a terminal in direct communication transmits indication information at the target position, and determines, according to the indication information, whether to enter the DRX or DTX active time, or determines, according to the indication information, whether to perform the DRX or DTX configuration change, so as to achieve a flexible change of DRX or DTX configuration, and reduce the latency in setting up a sidelink radio bearer, thereby improving user experience.

As shown in Fig. 4, an embodiment of the present disclosure further provides an information indication method, including:
a step 301, monitoring, by a second terminal at a target position of the sidelink resource, indication information transmitted by a first terminal; and
a step 302, in the case that the monitored indication information indicates that the second terminal needs to enter a DRX active time or a DTX active time, activating, by the second terminal, a DRX inactivity timer or a DTX inactivity timer corresponding to a sidelink interface; or, in the case that the monitored indication information indicates that the second terminal needs to perform a DRX configuration change or a DTX configuration change, performing, by the second terminal, the DRX configuration change or the DTX configuration change; or, in the case that the monitored indication information indicates identification information of a DRX configuration for the second terminal to be used after the DRX configuration is changed or identification information of a DTX configuration for the second terminal to be used after the DTX configuration is changed, changing, by the second terminal, to the DRX configuration or the DTX configuration indicated by the identification information;
where the first terminal is communicating with the second terminal through the sidelink interface.

In an embodiment of the present disclosure, the indication information further includes: a sidelink source address (i.e., the address of a terminal transmitting data) and a sidelink destination address (i.e., the address of a terminal receiving data).

In the embodiments of the present disclosure, due to the indication of the indication information, the first terminal and the second terminal may enter the active time synchronously, or the DRX configuration/DTX configuration of the first terminal and the second terminal may be changed synchronously, so as to meet the latency requirements of different kinds of traffics and improve user experience.

It is noted, in direct communication, the first terminal may serve as a data transmitting terminal or a data receiving terminal; likewise, the second terminal may serve as a data receiving terminal or a data transmitting terminal. When the first terminal is the data transmitting terminal, the second terminal is the data receiving terminal; in this case, the indication information transmitted by the data transmitting terminal is used for indicating at least one of following information:
whether the second terminal needs to enter a DRX active time;
whether the second terminal needs to perform a DRX configuration change; or
identification information of a DRX configuration for the second terminal to be used after the DRX configuration is changed.

When the first terminal is the data receiving terminal, the second terminal is the data transmitting terminal; in this case, the indication information transmitted by the data receiving terminal is used for indicating at least one of following information:
whether the second terminal needs to enter a DTX active time;
whether the second terminal needs to perform a DTX configuration change; or
identification information of a DTX configuration for the second terminal to be used after the DTX configuration is changed.

Optionally, in at least one embodiment of the present disclosure, the step 301 includes: monitoring, by the second terminal at the target position of a sidelink resource, the indication information transmitted by the first terminal, in the case that the second terminal is in a DRX inactive time or DTX inactive time.

In at least one embodiment of the present disclosure, the second terminal needs to determine the target position before monitoring, at the target position of the sidelink resources, the indication information transmitted by the first terminal. The manner in which the target position is determined includes, but is not limited to:
determining the target position by the second terminal according to a predetermined protocol; or,
determining the target position by the second terminal according to target position indication information transmitted by the first terminal and received through the sidelink interface, the target position. For example, the first terminal transmits the target position indication information to the second terminal via a PC5-RRC reconfiguration signaling.

As an optional embodiment, the second terminal needs to firstly determine the target position prior to monitoring, at the target position of the sidelink resources, the indication information transmitted by the first terminal. The manner in which the target position is determined by the second terminal includes:
determining the target position by the second terminal according to a terminal implementation requirement,; or,
determining the target position by the second terminal according to an RRC state of the second terminal at a Uu interface.

Optionally, the determining the target position by the second terminal according to the RRC state of the second terminal at the Uu interface includes:
determining the target position by the second terminal, according to target position indication information transmitted by a network-side device and received through the Uu interface, in the case that the second terminal is in an RRC connected state at the Uu interface; for example, the network-side device transmits the target position indication information to the second terminal by means of a Uu interface dedicated signaling; or,
determining the target position by the second terminal, according to a system information block transmitted by the network-side device and received through the Uu interface, in the case that the second terminal is in an RRC idle state or RRC inactive state at the Uu interface, where the system information block carries the target position indication information; or,
determining the target position by the second terminal according to pre-configured information, in the case that the second terminal is in an RRC out-of-coverage state at the Uu interface.

In at least one embodiment of the present disclosure, an enabling (enable/disable) mechanism is introduced with respect to the monitoring of indication information. Upon determination of enabling status information (enable/disable), one terminal in sidelink communication may notify the opposite terminal in the sidelink of the enabling status information through the sidelink interface.

In the case that the enabling mechanism is implemented, in at least one embodiment of the present disclosure, the method further includes:
transmitting, by the second terminal, enabling status information to the first terminal through the sidelink interface in the case that the second terminal is in the DRX active time or DTX active time; or,
receiving, by the second terminal, enabling status information transmitted by the first terminal through the sidelink interface in the case that the second terminal is in the DRX active time or DTX active time;
where the enabling status information is used for indicating an operation status of an enabling switch, and the operation status of the enabling switch includes: an enabled status or a disabled status.

It is noted, when the operation status of the enabling switch is the enabled status, the first terminal transmits the indication information at the target position, and the second terminal monitors the indication information at the target position; when the operation status of the enabling switch is the disabled status, the first terminal stops transmitting the indication information at the target position or the first terminal does not transmit the indication information at the target position, and the second terminal stops monitoring the indication information at the target position or the second terminal does not monitor the indication information at the target position.

For example, after determining that the operation status of the enabling switch is the enabled status, the second terminal firstly transmits the enabling status information to the first terminal, then the first terminal transmits the indication information at the target position, and correspondingly, the second terminal monitors the indication information at the target position.

For another example, after determining that the operation status of the enabling switch is the disabled status, the second terminal transmits the enabling status information to the first terminal; correspondingly, the first terminal does not transmit the indication information at the target position, and the second terminal does not monitor the indication information at the target position.

For yet another example, after the second terminal determines that the operation status of the enabling switch is the enabled status; firstly, the second terminal transmits the enabling status information to the first terminal, then the first terminal transmits the indication information at the target position; correspondingly, the second terminal monitors the indication information at the target position. After the execution of service, if it is needed to change the operation status of the enabling switch to the disabled status (the change may be triggered by the first terminal, or may be triggered by the second terminal), the second terminal transmits the enabling status information to the first terminal again (the enabling status information indicates that the operation status of the enabling switch is the disabled status), subsequently the first terminal does not transmit the indication information at the target position, and the second terminal does not monitor the indication information at the target position.

For still another example, after the second terminal determines that the operation status of the enabling switch is the disabled status, the second terminal transmits the enabling status information to the first terminal; correspondingly the first terminal does not transmit the indication information at the target position, and the second terminal does not monitor the indication information at the target position; after a period of time, if it is needed to change the operation status of the enabling switch to the enabled status (the change may be triggered by the first terminal, or may be triggered by the second terminal), the second terminal transmits the enabling status information to the first terminal again (the enabling status information indicates that the operation status of the enabling switch is the enabled status), subsequently the first terminal transmits the indication information at the target position, and correspondingly the second terminal monitors the indication information at the target position.

before transmitting the enabling status information to the first terminal through the sidelink interface, the second terminal should firstly determine the enabling status information. The manner in which the enabling status information is determined includes: determining the enabling status information by the second terminal according to a terminal implementation requirement; or, determining the enabling status information by the second terminal according to an RRC state of the second terminal at a Uu interface.

Optionally, in at least one embodiment of the present disclosure, the determining the enabling status information by the second terminal according to the RRC state of the second terminal at the Uu interface, includes:
obtaining, by the second terminal, the enabling status information transmitted by a network-side device through the Uu interface in the case that the second terminal is in an RRC connected state at the Uu interface; or,
determining the enabling status information by the second terminal according to a system information block transmitted by the network-side device and received through the Uu interface, in the case that the second terminal is in an RRC idle state or RRC inactive state at the Uu interface, where the system information block carries the enabling status information; or,
determining the enabling status information by the second terminal according to pre-configured information, in the case that the second terminal is in an RRC out-of-coverage state at the Uu interface.

In summary, in embodiments of the present disclosure, a terminal in sidelink communication transmits indication information at the target position, and determines, according to the indication information, whether to enter the DRX or DTX active time, or the terminal determines, according to the indication information, whether to perform the DRX or DTX configuration change, so as to achieve a flexible change of DRX or DTX configuration, and reduce the latency in setting up a sidelink radio bearer, thereby improving user experience.

In order to describe the information indication method according to the embodiments of the present disclosure more clearly, specific explanations with reference to several examples are provided hereinafter.

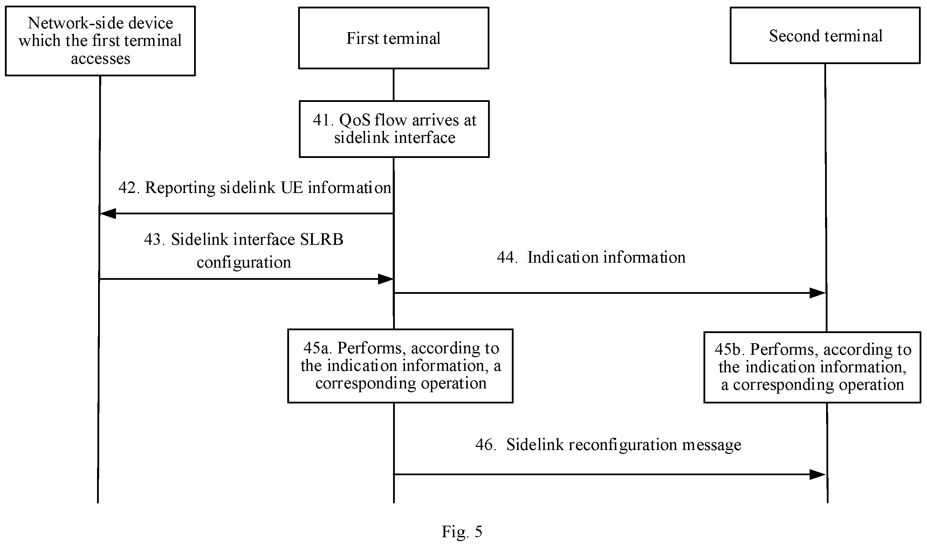

Example 1, the target position is determined by a protocol, and the information indication method is as shown in Fig. 5.

Step 41, quality of service flow (QoS flow) arrives at a sidelink interface.

In this step, the first terminal determines that a QoS flow arrives at the sidelink interface. For example, a network-side device which the first terminal accesses schedules the first terminal to transmit a first traffic to the second terminal, and then the QoS flow corresponding to the first traffic arrives at the sidelink interface of the first terminal.

Step 42, the first terminal reports sidelink UE information to the network-side device.

The step 42 is optional. If the first terminal does not store the sidelink interface radio bearer (sidelink radio bearer, SLRB) configuration information corresponding to the QoS flow, the first terminal requests, by means of the sidelink UE information, to obtain the SLRB configuration information corresponding to the QoS flow from the network-side device which it accesses. For example, in a 5G NR system, the message may be sidelink UE information. If the first terminal has stored the SLRB corresponding to the QoS flow, the step 42 and a step 43 are skipped, and the flow proceeds to a step 44.

Step 43, in response to the sidelink UE information, the network-side device transmits the SLRB configuration to the first terminal.

The step 43 is optional, and is in response to the step 42. The main function of the step 43 is such that the network-side device which the first terminal accesses configures the sidelink interface SLRB configuration information for the first terminal.

Step 44, the first terminal transmits the indication information at the target position of the sidelink resources.

For example, if the first terminal is in a DRX/DTX inactive time, and the QoS flow arriving in the step 41 is a latency-sensitive traffic, the transmitting terminal in the sidelink needs to transmit at the target position the indication information to the corresponding receiving terminal in the sidelink.

In this embodiment, the target position is determined by a protocol, for example, determined as the starting position of each 10 ms, e.g., the starting slot.

Optionally, the indication information carries one of or a combination of following information:
whether the second terminal needs to enter a DRX/DTX active time;
whether the second terminal needs to perform a DRX/DTX configuration change; or
identification information of a DRX/DTX configuration to which the second terminal needs to switch (e.g., an index of the DRX/DTX configuration).

Optionally, an enable/disable mechanism may be introduced with respect to the transmission of indication information. Upon determination of the enabling status information (enable/disable), one terminal in sidelink communication may notify the opposite terminal in the sidelink communication of the enabling status information (enable/disable) through the sidelink interface.

Step 45a, the first terminal performs, according to the indication information, a corresponding operation indicated by the indication information.

Step 45b, the second terminal performs, according to the indication information, a corresponding operation indicated by the indication information.

The steps 45a and 45b are peer-to-peer operations between the first terminal and the second terminal, so as to achieve the synchronization of the first and second terminals.

Taking the second terminal as an example, the corresponding operation indicated by the indication information is:
if the second terminal enters the DRX/DTX active time according to the indication information, then the second terminal, upon receiving the indication information, needs to activate the sidelink DRX/DTX inactivity timer (drx-inactivity timer);
in the case that the second terminal determines, according to the indication information, that it is necessary to perform the DRX/DTX configuration change, if there are only long DRX/DTX cycle and short DRX/DTX cycle, then the second terminal perform a switching between the long DRX/DTX cycle and the short DRX/DTX cycle according to the indication information, if there are multiple sets of DRX/DTX cycles, the second terminal may perform the DRX/DTX configuration change according to the identification information of the DRX/DTX configuration indicated by the indication information, e.g., according to the DRX/DTX configuration index carried in the indication information, change the current DRX/DTX configuration to a DRX/DTX configuration corresponding to the DRX/DTX configuration index;
if the second terminal determines, according to the indication information, that it is not necessary to enter the DRX/DTX active time, then the second terminal remains in the inactive time and does not perform an operation;
if the second terminal determines, according to the indication information, that it is not necessary to perform a DRX/DTX configuration change, then the second terminal remains in the inactive time and does not perform an operation.

Step 46, sidelink reconfiguration message.

In the closest sidelink DRX/DTX active time, the first terminal may transmit a PC5-RRC reconfiguration message (i.e., sidelink reconfiguration message) to the second terminal to perform a sidelink SLRB configuration, so as to set up a sidelink radio bearer. After the sidelink radio bearer is set up, the first and second terminals may perform data transmissions therebetween through the established SLRB.

The closest sidelink DRX/DTX active time means:
if the second terminal enters the DRX/DTX active time according to the indication information, then the DRX/DTX active time is the closest sidelink DRX/DTX active time;
if the second terminal performs a switching between multiple sets of DRX/DTX configurations according to the indication information, then the closest sidelink DRX/DTX active time is the closest onduration after the DRX/DTX configuration is switched.

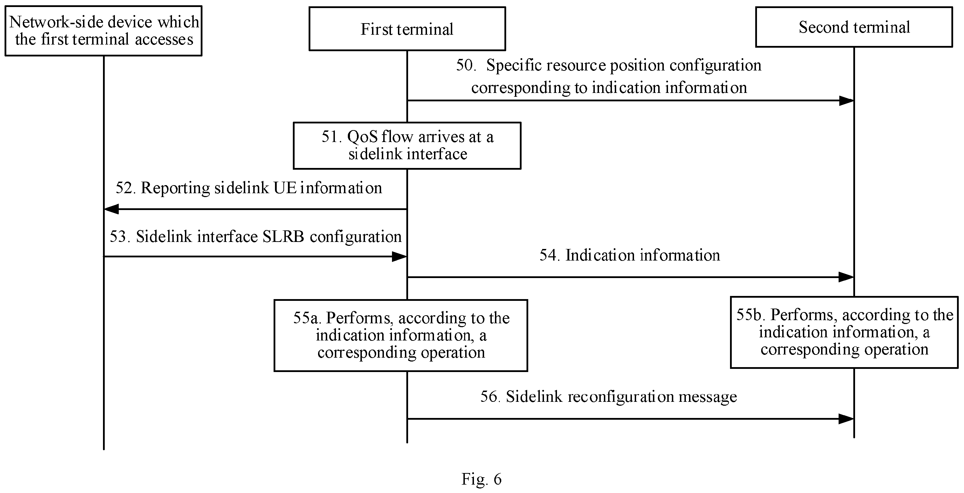

Example 2, the target position is transmitted by the first terminal to the second terminal through a sidelink interface signaling (e.g., PC5-RRC reconfiguration signaling), and the information indication method is as shown in Fig. 6.

Step 50, the first terminal determines the target position, and transmits target position indication information to the second terminal through the sidelink interface.

In this example, the target position corresponding to the indication information is transmitted by the first terminal to the second terminal by means of a sidelink interface signaling (e.g., PC5-RRC reconfiguration signaling).

Specifically, the manner in which the first terminal determines the target position includes:
1. The first terminal determines the target position by itself (i.e., determined based on the implementation of the transmitting terminal in the direct communication);
2. The manner in which the first terminal determines the target position depends on the RRC state of the first terminal:
   the network-side device which the first terminal accesses determines the target position and transmits the target position to the first terminal through a Uu interface dedicated signaling, in the case that the first terminal is in an RRC connected state;
   the network-side device which the first terminal accesses determines the target position and transmits the target position to the first terminal through a Uu interface system information block (SIB), in the case that the first terminal is in an RRC idle state or RRC inactive state;
   the first terminal determines, according to pre-configured information, the target position in the case that the first terminal is in an RRC out-of-coverage state.

Step 51, quality of service flow (QoS flow) arrives at a sidelink interface.

In this step, the first terminal determines that a QoS flow arrives at the sidelink interface. For example, a network-side device which the first terminal accesses schedules the first terminal to transmit a first traffic to the second terminal, and then the QoS flow corresponding to the first traffic arrives at the sidelink interface of the first terminal.

Step 52, the first terminal reports the sidelink UE information to the network-side device.

The step 52 is optional. If the first terminal does not store the SLRB configuration information corresponding to the QoS flow, the first terminal requests, by means of the sidelink UE information, to obtain the SLRB configuration information corresponding to the QoS flow from the network-side device which it accesses. For example, in a 5G NR system, the message may be sidelink UE information. If the first terminal has stored the SLRB corresponding to the QoS flow, the step 52 and a step 53 are skipped, and the flow proceeds to a step 54.

Step 53, in response to the sidelink UE information, the network-side device transmits the SLRB configuration to the first terminal.

The step 53 is optional, and is in response to the step 52. The main function of the step 53 is such that the network-side device which the first terminal accesses configures the sidelink interface SLRB configuration information for the first terminal.

Step 54, the first terminal transmits the indication information at the target position of the sidelink resource.

For example, if the first terminal is in a DRX/DTX inactive time, and the QoS flow arriving in the step 51 is a latency-sensitive traffic, the transmitting terminal in the sidelink needs to transmit at the target position the indication information to the corresponding receiving terminal in the sidelink.

The target position is determined according to the step 50.

The indication information may carry one of or a combination of following information:
whether the second terminal needs to enter a DRX/DTX active time;
whether the second terminal needs to perform a DRX/DTX configuration change; or
identification information of a DRX/DTX configuration to which the second terminal needs to switch (e.g., an index of the DRX/DTX configuration).

Optionally, an enable/disable mechanism may be introduced with respect to the transmission of indication information. Upon determination of the enabling status information (enable/disable), one terminal in sidelink communication may notify the opposite terminal in the sidelink communication of the enabling status information (enable/disable) through the sidelink interface.

Step 55a, the first terminal performs, according to the indication information, a corresponding operation indicated by the indication information.

Step 55b, the second terminal performs, according to the indication information, a corresponding operation indicated by the indication information.

The steps 55a and 55b are peer-to-peer operations between the first terminal and the second terminal, so as to achieve the synchronization of the first and second terminals.

Taking the second terminal as an example, the corresponding operation indicated by the indication information is:
if the second terminal enters the DRX/DTX active time according to the indication information, then the second terminal, upon receiving the indication information, needs to activate the sidelink DRX/DTX inactivity timer (drx-inactivity timer);
in the case that the second terminal determines, according to the indication information, that it is necessary to perform the DRX/DTX configuration change, if there are only long DRX/DTX cycle and short DRX/DTX cycle, then the second terminal perform a switching between the long DRX/DTX cycle and the short DRX/DTX cycle according to the indication information, if there are multiple sets of DRX/DTX cycles, the second terminal may perform the DRX/DTX configuration change according to the identification information of the DRX/DTX configuration indicated by the indication information, e.g., according to the DRX/DTX configuration index carried in the indication information, change the current DRX/DTX configuration to a DRX/DTX configuration corresponding to the DRX/DTX configuration index;
if the second terminal determines, according to the indication information, that it is not necessary to enter the DRX/DTX active time, then the second terminal remains in the inactive time and does not perform an operation;
if the second terminal determines, according to the indication information, that it is not necessary to perform a DRX/DTX configuration change, then the second terminal remains in the inactive time and does not perform an operation.

Step 56, sidelink reconfiguration message.

In the closest sidelink DRX/DTX active time, the first terminal may transmit a PC5-RRC reconfiguration message to the second terminal to effect a sidelink interface SLRB configuration, so as to set up a sidelink radio bearer. After the sidelink radio bearer is set up, the first and second terminals may perform data transmissions therebetween through the established SLRB.

The definition of the closest sidelink DRX/DTX active time is the same as that in the example 1, and a repeated description thereof is omitted herein.

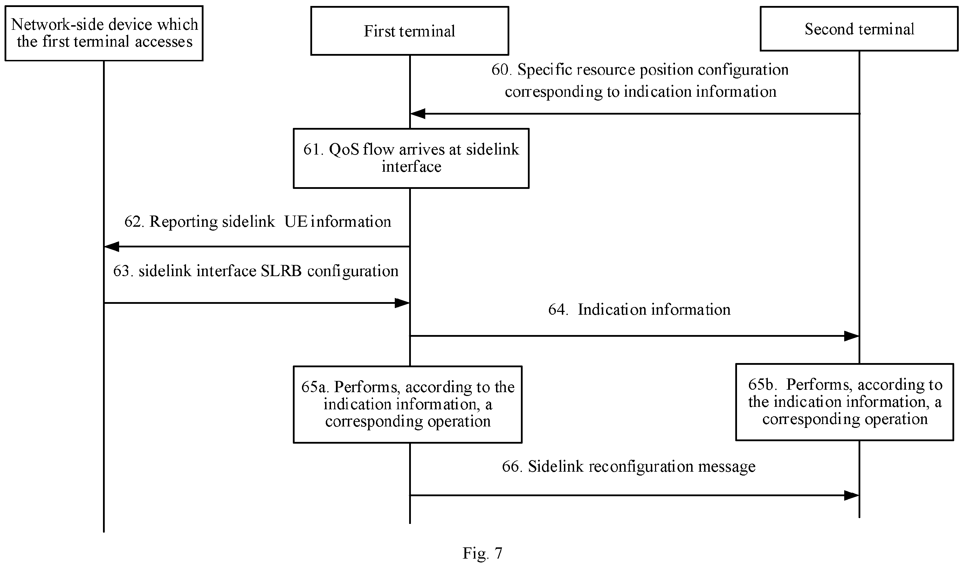

Example 3, the target position is transmitted by the second terminal to the first terminal through a sidelink interface signaling (e.g., PC5-RRC reconfiguration signaling), and the information indication method is as shown in Fig. 7.

Step 60, the second terminal determines the target position, and transmits target position indication information to the first terminal through the sidelink interface.

In this example, the target position corresponding to the indication information is transmitted by the second terminal to the first terminal by means of a sidelink interface signaling (e.g., PC5-RRC reconfiguration signaling).

Specifically, the manner in which the second terminal determines the target position includes:
1. The second terminal determines the target position by itself (i.e., determined based on the implementation of the transmitting terminal in the direct communication);
2. The manner in which the second terminal determines the target position depends on the RRC state of the second terminal:
   the network-side device which the second terminal accesses determines the target position and transmits the target position to the second terminal through a Uu interface dedicated signaling, in the case that the second terminal is in an RRC connected state;
   the network-side device which the second terminal accesses determines the target position and transmits the target position to the second terminal through a Uu interface SIB, in the case that the second terminal is in an RRC idle state or RRC inactive state;
   the second terminal determines, according to pre-configured information, the target position in the case that the second terminal is in an RRC out-of-coverage state.

Step 61, QoS flow arrives at the sidelink interface.

In this step, the first terminal determines that a QoS flow arrives at the sidelink interface. For example, a network-side device which the first terminal accesses schedules the first terminal to transmit a first traffic to the second terminal, and then the QoS flow corresponding to the first traffic arrives at the sidelink interface of the first terminal.

Step 62, the first terminal reports the sidelink UE information to the network-side device.

The step 62 is optional. If the first terminal does not store the SLRB configuration information corresponding to the QoS flow, the first terminal requests, by means of the sidelink UE information, to obtain the SLRB configuration information corresponding to the QoS flow from the network-side device which it accesses. For example, in a 5G NR system, the message may be sidelink UE information. If the first terminal has stored the SLRB corresponding to the QoS flow, the step 62 and a step 63 are skipped, and the flow proceeds to a step 64.

Step 63, in response to the sidelink UE information, the network-side device transmits the SLRB configuration to the first terminal.

The step 63 is optional, and is in response to the step 62. The main function of the step 63 is such that the network-side device which the first terminal accesses configures the sidelink interface SLRB configuration information for the first terminal.

Step 64, the first terminal transmits the indication information at the target position of the sidelink resources.

For example, if the first terminal is in a DRX/DTX inactive time, and the QoS flow arriving in the step 61 is a latency-sensitive traffic, the transmitting terminal in the sidelink needs to transmit at the target position the indication information to the corresponding receiving terminal in the sidelink.

The target position is determined according to the step 60.

The indication information may carry one of or a combination of following information:
whether the second terminal needs to enter a DRX/DTX active time;
whether the second terminal needs to perform a DRX/DTX configuration change; or
identification information of a DRX/DTX configuration to which the second terminal needs to switch (e.g., an index of the DRX/DTX configuration).

Optionally, an enable/disable mechanism may be introduced with respect to the transmission of indication information. Upon determination of the enabling status information (enable/disable), one terminal in sidelink communication may notify the opposite terminal in the sidelink of the enabling status information (enable/disable) through the sidelink interface.

Step 65a, the first terminal performs, according to the indication information, a corresponding operation indicated by the indication information.

Step 65b, the second terminal performs, according to the indication information, a corresponding operation indicated by the indication information.

The steps 65a and 65b are peer-to-peer operations between the first terminal and the second terminal, so as to achieve the synchronization of the first and second terminals.

Taking the second terminal as an example, the corresponding operation indicated by the indication information is:
if the second terminal enters the DRX/DTX active time according to the indication information, then the second terminal, upon receiving the indication information, needs to activate the sidelink DRX/DTX inactivity timer (drx-inactivity timer);
in the case that the second terminal determines, according to the indication information, that it is necessary to perform the DRX/DTX configuration change, if there are only long DRX/DTX cycle and short DRX/DTX cycle, then the second terminal perform a switching between the long DRX/DTX cycle and the short DRX/DTX cycle according to the indication information, if there are multiple sets of DRX/DTX cycles, the second terminal may perform the DRX/DTX configuration change according to the identification information of the DRX/DTX configuration indicated by the indication information, e.g., according to the DRX/DTX configuration index carried in the indication information, change the current DRX/DTX configuration to a DRX/DTX configuration corresponding to the DRX/DTX configuration index;
if the second terminal determines, according to the indication information, that it is not necessary to enter the DRX/DTX active time, then the second terminal remains in the inactive time and does not perform an operation;
if the second terminal determines, according to the indication information, that it is not necessary to perform a DRX/DTX configuration change, then the second terminal remains in the inactive time and does not perform an operation.

Step 66, sidelink reconfiguration message.

In the closest sidelink DRX/DTX active time, the first terminal may transmit a PC5-RRC reconfiguration message to the second terminal to effect a sidelink interface SLRB configuration, so as to set up a sidelink radio bearer. After the sidelink radio bearer is set up, the first and second terminals may perform data transmissions therebetween through the established SLRB.

The definition of the closest sidelink DRX/DTX active time is the same as that in the example 1, and a repeated description thereof is omitted herein.

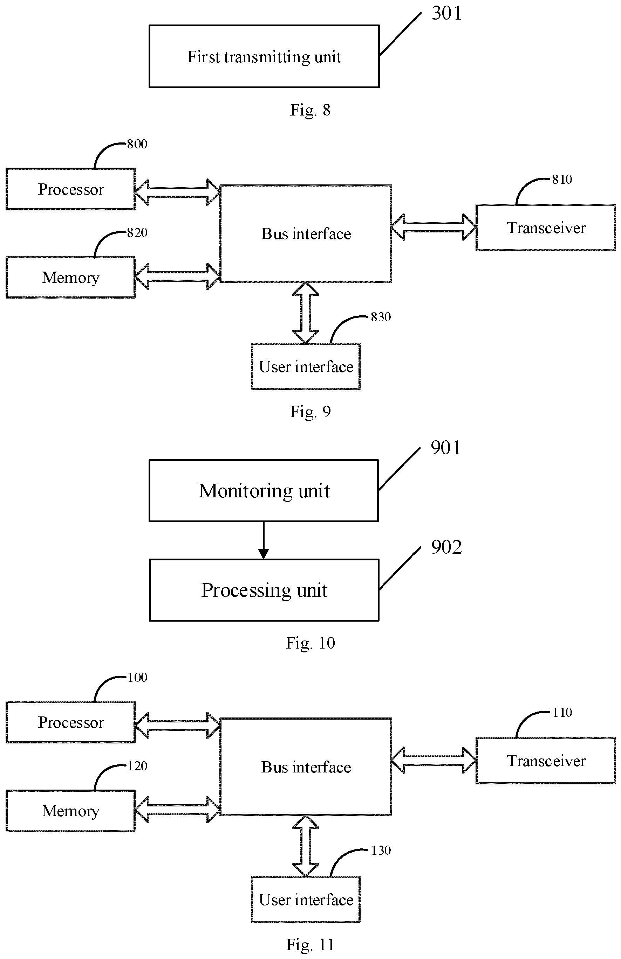

As shown in Fig. 8, an embodiment of the present disclosure further provides an information indication apparatus applied to a first terminal, including:
a first transmitting unit 701, configured to transmit indication information at a target position of the sidelink resource, where the indication information is used for indicating at least one of following information:
whether a second terminal needs to enter a DRX active time;
whether the second terminal needs to enter a DTX active time;
whether the second terminal needs to perform a DRX configuration change;
whether the second terminal needs to perform a DTX configuration change;
identification information of a DRX configuration for the second terminal to be used after the DRX configuration is changed; or
identification information of a DTX configuration for the second terminal to be used after the DTX configuration is changed;
where the second terminal is communicating with the first terminal through a sidelink interface.

As an optional embodiment, the apparatus further includes:
a first position determining unit, configured to determine, according to a predetermined protocol, the target position; or,
a second position determining unit, configured to determine, according to target position indication information transmitted by the second terminal and received through the sidelink interface, the target position.

As an optional embodiment, the apparatus further includes:
a third position determining unit, configured to determine, according to a terminal implementation requirement, the target position; or,
a fourth position determining unit, configured to determine, according to a radio resource control (RRC) state of the first terminal at a Uu interface, the target position.

As an optional embodiment, the fourth position determining unit includes a first determining sub-unit, configured to:
determine, according to target position indication information transmitted by a network-side device and received through the Uu interface, the target position in the case that the first terminal is in an RRC connected state at the Uu interface; or,
determine, according to a system information block transmitted by the network-side device and received through the Uu interface, the target position in the case that the first terminal is in an RRC idle state or RRC inactive state at the Uu interface, where the system information block carries the target position indication information; or,
determine, according to pre-configured information, the target position in the case that the first terminal is in an RRC out-of-coverage state at the Uu interface.

As an optional embodiment, the apparatus further includes at least one of following:
a first activation unit, configured to activate a DRX inactivity timer or a DTX inactivity timer corresponding to a sidelink interface in the case that the indication information indicates that the second terminal needs to enter the DRX active time or the DTX active time;
a first change unit, configured to perform the DRX configuration change or the DTX configuration change in the case that the indication information indicates that the second terminal needs to perform the DRX configuration change or the DTX configuration change; or
a second change unit, configured to change to the DRX configuration or the DTX configuration indicated by the identification information in the case that the indication information indicates the identification information of the DRX configuration for the second terminal to be used after the DRX configuration is changed or the identification information of the DTX configuration for the second terminal to be used after the DTX configuration is changed.

As an optional embodiment, the first transmitting unit includes:
a first transmitting sub-unit, configured to transmit the indication information at the target position of the sidelink resource in the case that the first terminal is in a DRX inactive time or DTX inactive time.

As an optional embodiment, the apparatus further includes:
a second transmitting unit, configured to transmit enabling status information to the second terminal through the sidelink interface in the case that the first terminal is in the DRX active time or DTX active time; or,
a first receiving unit, configured to receive enabling status information transmitted by the second terminal through the sidelink interface in the case that the first terminal is in the DRX active time or DTX active time;
where the enabling status information is used for indicating an operation status of an enabling switch, and the operation status of the enabling switch includes: an enabled status or a disabled status.

As an optional embodiment, the first transmitting unit includes:
a second transmitting sub-unit, configured to transmit the indication information at the target position of the sidelink resource in the case that the enabling status information indicates that the operation status of the enabling switch is the enabled status.

As an optional embodiment, the apparatus further includes:
a second determining unit, configured to determine, according to a terminal implementation requirement, the enabling status information; or, determine, according to an RRC state of the first terminal at a Uu interface, the enabling status information.

As an optional embodiment, the second determining unit includes a second determining sub-unit configured to:
obtain the enabling status information transmitted by a network-side device through the Uu interface; or,
determine, according to a system information block transmitted by the network-side device and received through the Uu interface, the enabling status information in the case that the first terminal is in an RRC idle state or RRC inactive state at the Uu interface, where the system information block carries the enabling status information; or,
determine, according to pre-configured information, the enabling status information in the case that the first terminal is in an RRC out-of-coverage state at the Uu interface.

In embodiments of the present disclosure, a terminal in sidelink communication transmits indication information at the target position, and determines, according to the indication information, whether to enter the DRX or DTX active time, or the terminal determines, according to the indication information, whether to perform the DRX or DTX configuration change, so as to achieve a flexible change of DRX or DTX configuration, and reduce the latency in setting up a sidelink radio bearer, thereby improving user experience.

The method and apparatus are based on the same creative concept, and share similar principle to solve the problem. Therefore, for the implementation of one of the method and the apparatus, references may be made to the other of the method and the apparatus. A repeated description is omitted herein.

As shown in Fig. 9, an embodiment of the present disclosure further provides a terminal, the terminal being a first terminal, and including a memory 820, a transceiver 810 and a processor 800, where the memory 820 is configured to store a computer program, the transceiver 810 is configured to transmit and receive data under the control of the processor 800, and the processor 800 is configured to read the computer program from the memory 820 to implement:
transmitting indication information at a target position of the sidelink resource, where the indication information is used for indicating at least one of following information:
whether a second terminal needs to enter a DRX active time;
whether the second terminal needs to enter a DTX active time;
whether the second terminal needs to perform a DRX configuration change;
whether the second terminal needs to perform a DTX configuration change;
identification information of a DRX configuration for the second terminal to be used after the DRX configuration is changed; or
identification information of a DTX configuration for the second terminal to be used after the DTX configuration is changed;
where the second terminal is communicating with the first terminal through a sidelink interface.

As an optional embodiment, the processor 800 is further configured to read the computer program from the memory 820 to implement:
determining, according to a predetermined protocol, the target position; or,
determining, according to target position indication information transmitted by the second terminal and received through the sidelink interface, the target position.

As an optional embodiment, the processor 800 is further configured to read the computer program from the memory 820 to implement:
determining, according to a terminal implementation requirement, the target position; or,
determining, according to a radio resource control (RRC) state of the first terminal at a Uu interface, the target position.

As an optional embodiment, the processor 800 is further configured to read the computer program from the memory 820 to implement:
determining, according to target position indication information transmitted by a network-side device and received through the Uu interface, the target position in the case that the first terminal is in an RRC connected state at the Uu interface; or,
determining, according to a system information block transmitted by the network-side device and received through the Uu interface, the target position in the case that the first terminal is in an RRC idle state or RRC inactive state at the Uu interface, where the system information block carries the target position indication information; or,
determining, according to pre-configured information, the target position in the case that the first terminal is in an RRC out-of-coverage state at the Uu interface.

As an optional embodiment, the processor 800 is further configured to read the computer program from the memory 820 to implement:
activating a DRX inactivity timer or a DTX inactivity timer corresponding to a sidelink interface in the case that the indication information indicates that the second terminal needs to enter the DRX active time or the DTX active time;
performing the DRX configuration change or the DTX configuration change in the case that the indication information indicates that the second terminal needs to perform the DRX configuration change or the DTX configuration change; or
changing to the DRX configuration or the DTX configuration indicated by the identification information in the case that the indication information indicates the identification information of the DRX configuration for the second terminal to be used after the DRX configuration is changed or the identification information of the DTX configuration for the second terminal to be used after the DTX configuration is changed.

As an optional embodiment, the processor 800 is further configured to read the computer program from the memory 820 to implement:
transmitting the indication information at the target position of the sidelink resource in the case that the first terminal is in a DRX inactive time or DTX inactive time.

As an optional embodiment, the processor 800 is further configured to read the computer program from the memory 820 to implement:
transmitting enabling status information to the second terminal through the sidelink interface in the case that the first terminal is in the DRX active time or DTX active time; or,
receiving enabling status information transmitted by the second terminal through the sidelink interface in the case that the first terminal is in the DRX active time or DTX active time;
where the enabling status information is used for indicating an operation status of an enabling switch, and the operation status of the enabling switch includes: an enabled status or a disabled status.

As an optional embodiment, the processor 800 is further configured to read the computer program from the memory 820 to implement:
transmitting the indication information at the target position of the sidelink resource in the case that the enabling status information indicates that the operation status of the enabling switch is the enabled status.

As an optional embodiment, the processor 800 is further configured to read the computer program from the memory 820 to implement:
determining, according to a terminal implementation requirement, the enabling status information; or,
determining, according to an RRC state of the first terminal at a Uu interface, the enabling status information.

As an optional embodiment, the processor 800 is further configured to read the computer program from the memory 820 to implement:
obtaining the enabling status information transmitted by a network-side device through the Uu interface in the case that the first terminal is in an RRC connected state at the Uu interface; or,
determining, according to a system information block transmitted by the network-side device and received through the Uu interface, the enabling status information in the case that the first terminal is in an RRC idle state or RRC inactive state at the Uu interface, where the system information block carries the enabling status information; or,
determining, according to pre-configured information, the enabling status information in the case that the first terminal is in an RRC out-of-coverage state at the Uu interface.

In Fig. 9, a bus architecture may include any number of interconnected buses and bridges, and connects various circuits including one or more processors represented by the processor 800 and memory represented by the memory 820. The bus architecture may also connect various other circuits such as peripherals, voltage regulators and power management circuits, which are well known in the art. Therefore, a detailed description thereof is omitted herein. A bus interface provides an interface. The transceiver 810 may be multiple elements, such as a transmitter and a receiver, to allow for communication with various other apparatuses on the transmission medium. These transmission media include wireless channel, wired channel, optic fiber or the like. For different user equipment, the user interface 830 may be an interface capable of externally or internally connecting a required device, and the connected device includes, but is not limited to: a keypad, a display, a speaker, a microphone, a joystick and the like.

The processor 800 is responsible for supervising the bus architecture and normal operation and the memory 820 may store the data being used by the processor 800 during operation.

Optionally, the processor 800 may be a central processing unit (CPU), an application specific integrated circuit (ASIC), a field-programmable gate array (FPGA) or a complex programmable logic device (CPLD). The processor may also adopt a multi-core architecture.

The processor invokes a computer program stored in the memory and implements any one method provided in the embodiments of the present disclosure according to the obtained executable instructions. The processor and the memory may also be arranged physically separately.

In embodiments of the present disclosure, a terminal in sidelink communication transmits indication information at the target position, and determines, according to the indication information, whether to enter the DRX or DTX active time, or the terminal determines, according to the indication information, whether to perform the DRX or DTX configuration change, so as to achieve a flexible change of DRX or DTX configuration, and reduce the latency in setting up a sidelink radio bearer, thereby improving user experience.

It is noted, the terminal provided in the embodiments of the present disclosure is a terminal capable of implementing the foregoing information indication method, and all embodiments of the information indication method are applicable to the terminal and can achieve the same or similar beneficial effects.

As shown in Fig. 10, an embodiment of the present disclosure further provides an information indication apparatus applied to a second terminal, including:
a monitoring unit 901, configured to monitor, at a target position of the sidelink resource, indication information transmitted by a first terminal;
a processing unit 902, configured to: in the case that the monitored indication information indicates that the second terminal needs to enter a DRX active time or a DTX active time, activate a DRX inactivity timer or a DTX inactivity timer corresponding to a sidelink interface; or configured to: in the case that the monitored indication information indicates that the second terminal needs to perform a DRX configuration change or a DTX configuration change, perform the DRX configuration change or the DTX configuration change; or configured to: in the case that the monitored indication information indicates identification information of a DRX configuration for the second terminal to be used after the DRX configuration is changed or identification information of a DTX configuration for the second terminal to be used after the DTX configuration is changed, change to the DRX configuration or the DTX configuration indicated by the identification information;
where the first terminal is communicating with the second terminal through the sidelink interface.

As an optional embodiment, the apparatus further includes:
a fifth position determining unit, configured to determine, according to a predetermined protocol, the target position; or,
a sixth position determining unit, configured to determine, according to target position indication information transmitted by the first terminal and received through the sidelink interface, the target position.

As an optional embodiment, the apparatus further includes:
a seventh position determining unit, configured to determine, according to a terminal implementation requirement, the target position; or,
an eighth position determining unit, configured to determine, according to an RRC state of the second terminal at a Uu interface, the target position.

As an optional embodiment, the eighth position determining unit includes a third determining sub-unit, configured to:
determine, according to target position indication information transmitted by a network-side device and received through the Uu interface, the target position in the case that the second terminal is in an RRC connected state at the Uu interface; or, determine, according to a system information block transmitted by the network-side device and received through the Uu interface, the target position in the case that the second terminal is in an RRC idle state or RRC inactive state at the Uu interface, where the system information block carries the target position indication information; or, determine, according to pre-configured information, the target position in the case that the second terminal is in an RRC out-of-coverage state at the Uu interface.

As an optional embodiment, the monitoring unit includes:
a first monitoring sub-unit, configured to monitor, at the target position of the sidelink resource, the indication information transmitted by the first terminal, in the case that the second terminal is in a DRX inactive time or DTX inactive time.

As an optional embodiment, the apparatus further includes:
a third transmitting unit, configured to transmit enabling status information to the first terminal through the sidelink interface in the case that the second terminal is in the DRX active time or DTX active time; or,
a third receiving unit, configured to receive enabling status information transmitted by the first terminal through the sidelink interface in the case that the second terminal is in the DRX active time or DTX active time;
where the enabling status information is used for indicating an operation status of an enabling switch, and the operation status of the enabling switch includes: an enabled status or a disabled status.

As an optional embodiment, the monitoring unit includes: a second monitoring sub-unit, configured to monitor, at the target position of the sidelink resource, the indication information transmitted by the first terminal, in the case that the enabling status information indicates that the operation status of the enabling switch is the enabled status.

As an optional embodiment, the apparatus further includes: a fourth determining unit, configured to determine, according to a terminal implementation requirement, the enabling status information; or, determine, according to an RRC state of the second terminal at a Uu interface, the enabling status information.

As an optional embodiment, the fourth determining unit includes: a fourth determining sub-unit, configured to obtain the enabling status information transmitted by a network-side device through the Uu interface in the case that the second terminal is in an RRC connected state at the Uu interface; or, determine, according to a system information block transmitted by the network-side device and received through the Uu interface, the enabling status information in the case that the second terminal is in an RRC idle state or RRC inactive state at the Uu interface, where the system information block carries the enabling status information; or, determine, according to pre-configured information, the enabling status information in the case that the second terminal is in an RRC out-of-coverage state at the Uu interface.

In embodiments of the present disclosure, a terminal in sidelink communication monitors indication information at the target position, and determines, according to the indication information, whether to enter the DRX or DTX active time, or the terminal determines, according to the indication information, whether to perform the DRX or DTX configuration change, so as to achieve a flexible change of DRX or DTX configuration, and reduce the latency in setting up a sidelink radio bearer, thereby improving user experience.

The method and apparatus are based on the same creative concept, and share similar principle to solve the problem. Therefore, for the implementation of one of the method and the apparatus, references may be made to the other of the method and the apparatus. A repeated description is omitted herein.

As shown in Fig. 11, an embodiment of the present disclosure further provides a terminal, the terminal being a second terminal, and including a memory 120, a transceiver 110 and a processor 100, where the memory 120 is configured to store a computer program, the transceiver 110 is configured to transmit and receive data under the control of the processor 100, and the processor 100 is configured to read the computer program from the memory 120 to implement:
monitoring, at a target position of the sidelink resource, indication information transmitted by a first terminal;
in the case that the monitored indication information indicates that the second terminal needs to enter a DRX active time or a DTX active time, activating a DRX inactivity timer or a DTX inactivity timer corresponding to a sidelink interface;
in the case that the monitored indication information indicates that the second terminal needs to perform a DRX configuration change or a DTX configuration change, performing the DRX configuration change or the DTX configuration change;
in the case that the monitored indication information indicates identification information of a DRX configuration for the second terminal to be used after the DRX configuration is changed or identification information of a DTX configuration for the second terminal to be used after the DTX configuration is changed, changing to the DRX configuration or the DTX configuration indicated by the identification information;
where the first terminal is communicating with the second terminal through the sidelink interface.

As an optional embodiment, the processor 100 is further configured to read the computer program from the memory 120 to implement:
determining, according to a predetermined protocol, the target position; or,
determining, according to target position indication information transmitted by the first terminal and received through the sidelink interface, the target position.

As an optional embodiment, the processor 100 is further configured to read the computer program from the memory 120 to implement:
determining, according to a terminal implementation requirement, the target position; or,
determining, according to an RRC state of the second terminal at a Uu interface, the target position.

As an optional embodiment, the processor 100 is further configured to read the computer program from the memory 120 to implement:
determining, according to target position indication information transmitted by a network-side device and received through the Uu interface, the target position in the case that the second terminal is in an RRC connected state at the Uu interface; or,
determining, according to a system information block transmitted by the network-side device and received through the Uu interface, the target position in the case that the second terminal is in an RRC idle state or RRC inactive state at the Uu interface, where the system information block carries the target position indication information; or,
determining, according to pre-configured information, the target position in the case that the second terminal is in an RRC out-of-coverage state at the Uu interface.

As an optional embodiment, the processor 100 is further configured to read the computer program from the memory 120 to implement: monitoring, at the target position of the sidelink resource, the indication information transmitted by the first terminal, in the case that the second terminal is in a DRX inactive time or DTX inactive time.

As an optional embodiment, the processor 100 is further configured to read the computer program from the memory 120 to implement: transmitting enabling status information to the first terminal through the sidelink interface in the case that the second terminal is in the DRX active time or DTX active time; or, receiving enabling status information transmitted by the first terminal through the sidelink interface in the case that the second terminal is in the DRX active time or DTX active time; where the enabling status information is used for indicating an operation status of an enabling switch, and the operation status of the enabling switch includes: an enabled status or a disabled status.

As an optional embodiment, the processor 100 is further configured to read the computer program from the memory 120 to implement: monitoring, at the target position of the sidelink resource, the indication information transmitted by the first terminal, in the case that the enabling status information indicates that the operation status of the enabling switch is the enabled status.

As an optional embodiment, the processor 100 is further configured to read the computer program from the memory 120 to implement: determining, according to a terminal implementation requirement, the enabling status information; or, determining, according to an RRC state of the second terminal at a Uu interface, the enabling status information.

As an optional embodiment, the processor 100 is further configured to read the computer program from the memory 120 to implement:
obtaining the enabling status information transmitted by a network-side device through the Uu interface in the case that the second terminal is in an RRC connected state at the Uu interface; or,
determining, according to a system information block transmitted by the network-side device and received through the Uu interface, the enabling status information in the case that the second terminal is in an RRC idle state or RRC inactive state at the Uu interface, where the system information block carries the enabling status information; or,
determining, according to pre-configured information, the enabling status information in the case that the second terminal is in an RRC out-of-coverage state at the Uu interface.

In Fig. 11, a bus architecture may include any number of interconnected buses and bridges, and connects various circuits including one or more processors represented by the processor 100 and memory represented by the memory 120. The bus architecture may also connect various other circuits such as peripherals, voltage regulators and power management circuits, which are well known in the art. Therefore, a detailed description thereof is omitted herein. A bus interface provides an interface. The transceiver 110 may be multiple elements, such as a transmitter and a receiver, to allow for communication with various other apparatuses on the transmission medium. These transmission media include wireless channel, wired channel, optic fiber or the like. For different user equipment, the user interface 130 may be an interface capable of externally or internally connecting a required device, and the connected device includes, but is not limited to: a keypad, a display, a speaker, a microphone, a joystick and the like.

The processor 100 is responsible for supervising the bus architecture and normal operation and the memory 120 may store the data being used by the processor 100 during operation.

Optionally, the processor 100 may be a CPU, an ASIC, an FPGA or a CPLD. The processor may also adopt a multi-core architecture.

The processor invokes a computer program stored in the memory and implements any one method provided in the embodiments of the present disclosure according to the obtained executable instructions. The processor and the memory may also be arranged physically separately.

In embodiments of the present disclosure, a terminal in sidelink communication monitors indication information at the target position, and determines, according to the indication information, whether to enter the DRX or DTX active time, or the terminal determines, according to the indication information, whether to perform the DRX or DTX configuration change, so as to achieve a flexible change of DRX or DTX configuration, and reduce the latency in setting up a sidelink radio bearer, thereby improving user experience.

It is noted, the terminal provided in the embodiments of the present disclosure is a terminal capable of implementing the foregoing information indication method, and all embodiments of the information indication method are applicable to the terminal and can achieve the same or similar beneficial effects.

It should be noted that the division of units in the embodiments of the present disclosure is illustrative, and is only a logical function division, and there may be another division method in actual implementation. In addition, the functional units in various embodiments of the present disclosure may be integrated into one processing unit, or each unit may exist separately physically, or two or more units may be integrated into one unit. The above-mentioned integrated units can be implemented in the form of hardware or in the form of software functional units.

If the integrated unit is implemented in the form of a software function unit and sold or used as an independent product, it can be stored in a processor-readable storage medium. Based on such an understanding, essential parts, or parts contributing to the related art, of the technical solution of the present disclosure, or all or a part of the technical solution may be implemented in a form of a software product. The computer software product is stored in a storage medium, and includes several instructions to enable a computer device (which may be a personal computer, a server, or a network device, etc.) or a processor to execute all or part of the steps of the methods described in the various embodiments of the present disclosure. The aforementioned storage media include: a universal serial bus (USB) flash drive, removable hard disk, read-only memory (ROM), random access memory (RAM), magnetic disk, optical disc or other media that can store program codes.

The present disclosure further provides in an embodiment a processor readable storage medium storing a computer program, where the computer program is configured to be executed by a processor to implement the steps of the foregoing method embodiments. The processor readable storage medium may be any available medium or data storage device that can be accessed by the processor, including but not limited to magnetic storage (such as floppy disk, hard disk, magnetic tape, magneto-optical disk (MO)), optical storage (such as compact disc (CD), digital versatile disc (DVD), blue-ray disc (BD), high-definition versatile disc (HVD)), and semiconductor memory (such as ROM, electrically programmable ROM (EPROM), electrically erasable programmable ROM (EEPROM), non-volatile memory (NAND FLASH), solid-state drive (SSD)), etc.

A person skilled in the art can understand that embodiments of the present disclosure may be provided as a method, system, or computer program product. Accordingly, the present disclosure may take the form of an entirely hardware embodiment, an entirely software embodiment, or an embodiment combining software and hardware aspects. Furthermore, the present disclosure may take the form of a computer program product configured to be implemented on one or more computer-usable storage media (including but not limited to disk storage, optical storage, etc.) storing computer-usable program codes therein.

The present disclosure is described with reference to flowcharts and/or block diagrams of methods, devices (systems), and computer program products according to the embodiments of the disclosure. It will be understood that each process and/or block in the flowcharts and/or block diagrams, and combinations of processes and/or blocks in the flowcharts and/or block diagrams, can be implemented by computer executable instructions. These computer executable instructions may be provided to the processor of a general-purpose computer, special purpose computer, embedded processor or other programmable data processing device to produce a machine, such that the instructions executed by the processor of the computer or other programmable data processing device produce an apparatus for implementing the functions specified in one or more processes in the flowcharts and/or one or more blocks in the block diagrams.

These processor-executable instructions may also be stored in a processor-readable storage capable of directing a computer or other programmable data processing device to operate in a specific manner, such that the instructions stored in the processor-readable storage produce an article of manufacture including instruction means, the instruction means implements the functions specified in one or more processes of the flowchart and/or one or more blocks of the block diagram.

These processor-executable instructions can also be loaded onto a computer or other programmable data processing device, so that a series of operational steps can be performed on the computer or other programmable device to produce a computer-implemented process, the instructions executed on the computer or other programmable devices thus provide steps for realizing the functions specified in one or more processes of the flowchart and/or one or more blocks of the block diagram.

It should be noted that the division of modules is only a logical function division, and in actual implementation, all or some of the modules may be integrated on one physical entity, or may be physically separated. All these modules may be implemented by a software invoked by a processing element, or implemented by a hardware. Alternatively, some of these modules may be implemented by software invoked by a processing element, and some of these modules may be implemented by hardware. For example, the determining module may be a standalone processing element, or may be integrated in a certain chip of the foregoing apparatuses. In addition, the determining module may be stored in the memory of the foregoing apparatuses in form of program codes, and is invoked by a certain processing element of the foregoing apparatuses to implement the function of the determining module. Other modules may be implemented in a similar way. In addition, all or some of these modules may be integrated together, or may be implemented independently. The processing element may be a kind of integrated circuit having a signal processing capability. In implementation, various steps of the method or the various modules can be implemented through hardware integrated logic circuits in the processor element or instructions in the form of software.

For example, the various modules, units, sub-units or sub-modules may be one or more integrated circuits configured to implement the foregoing methods, e.g., one or more ASICs, one or more digital signal processors (DSPs), one or more FPGAs, or the like. For another example, when a certain module is implemented by program codes invoked by a processing element, the processing element may be a general-purpose processor, e.g., a CPU or other processor capable of invoking program codes. For yet another example, these modules may be integrated together and implemented in the form of a system-on-a-chip (SOC).

Terms "first", "second" and the like in the specification and claims of this disclosure are adopted not to describe a specific sequence or order but to distinguish similar objects. It should be understood that data used like this may be interchanged under a proper condition for implementation of the embodiments of the disclosure described here in a sequence apart from those shown or described here. In addition, terms "include" and "have" and any variant thereof are intended to cover nonexclusive inclusions. For example, a process, method, system, product or equipment including a series of steps or units is not limited to those steps or units which are clearly listed, but may include other steps or units which are not clearly listed or intrinsic to the process, the method, the product or the equipment. In addition, the term "and/or" as used in the description and claims refers to at least one of objects connected by the term, for example, A and/or B and/or C represents seven possibilities: only A exists, only B exists, only C exists, both A and B exist, both B and C exist, both A and C exist, and all of A, B and C exist. Similarly, the expression "at least one of A or B" used in the description and claims should be construed as "only A exists, only B exists, or both A and B exist".

Obviously, modifications and improvements may be made by a person of ordinary skill in the art without departing from the spirit and scope of the present disclosure, and these modifications and improvements shall be encompassed by the present disclosure if the modifications and improvements fall within the scope of the claims of the present disclosure and equivalents thereof.

## Claims

1. An information indication method, comprising:
transmitting, by a first terminal, indication information at a target position of a sidelink resource, wherein the indication information is used for indicating at least one of following information:
whether a second terminal needs to enter a discontinuous reception (DRX) active time;
whether the second terminal needs to enter a discontinuous transmission (DTX) active time;
whether the second terminal needs to perform a DRX configuration change;
whether the second terminal needs to perform a DTX configuration change;
identification information of a DRX configuration for the second terminal to be used after the DRX configuration is changed; or
identification information of a DTX configuration for the second terminal to be used after the DTX configuration is changed;
wherein the second terminal is communicating with the first terminal through a sidelink interface.

2. The information indication method according to claim 1, wherein prior to the transmitting, by the first terminal, the indication information at the target position of the sidelink resource, the method further comprises:
determining the target position by the first terminal, according to a predetermined protocol; or,
determining the target position by the first terminal, according to target position indication information transmitted by the second terminal and received through the sidelink interface.

3. The information indication method according to claim 1, wherein prior to the transmitting, by the first terminal, the indication information at the target position of the sidelink resource, the method further comprises:
determining the target position by the first terminal, according to a terminal implementation requirement; or,
determining the target position by the first terminal, according to a radio resource control (RRC) state of the first terminal at a Uu interface.

4. The information indication method according to claim 3, wherein the determining the target position by the first terminal, according to the RRC state of the first terminal at the Uu interface comprises:
determining the target position by the first terminal, according to target position indication information transmitted by a network-side device and received through the Uu interface, in the case that the first terminal is in an RRC connected state at the Uu interface; or,
determining the target position by the first terminal, according to a system information block transmitted by the network-side device and received through the Uu interface, in the case that the first terminal is in an RRC idle state or RRC inactive state at the Uu interface, wherein the system information block carries the target position indication information; or,
determining the target position by the first terminal, according to pre-configured information, in the case that the first terminal is in an RRC out-of-coverage state at the Uu interface.

5. The information indication method according to claim 1, wherein subsequent to the transmitting, by the first terminal, the indication information at the target position of the sidelink resource, the method further comprises at least one of following:
activating, by the first terminal, a DRX inactivity timer or a DTX inactivity timer corresponding to the sidelink interface, in the case that the indication information indicates that the second terminal needs to enter the DRX active time or the DTX active time;
performing, by the first terminal, the DRX configuration change or the DTX configuration change, in the case that the indication information indicates that the second terminal needs to perform the DRX configuration change or the DTX configuration change; or
changing, by the first terminal, to the DRX configuration or the DTX configuration indicated by the identification information, in the case that the indication information indicates the identification information of the DRX configuration for the second terminal to be used after the DRX configuration is changed, or the identification information of the DTX configuration for the second terminal to be used after the DTX configuration is changed.

6. The information indication method according to claim 1, wherein the transmitting, by the first terminal, the indication information at the target position of the sidelink resource comprises:
transmitting, by the first terminal, the indication information at the target position of the sidelink resource, in the case that the first terminal is in a DRX inactive time or DTX inactive time.

7. The information indication method according to claim 1, further comprising:
transmitting, by the first terminal, enabling status information to the second terminal through the sidelink interface, in the case that the first terminal is in the DRX active time or DTX active time;
or,
receiving, by the first terminal, enabling status information transmitted by the second terminal through the sidelink interface, in the case that the first terminal is in the DRX active time or DTX active time;
wherein the enabling status information is used for indicating an operation status of an enabling switch, and the operation status of the enabling switch comprises: an enabled status or a disabled status.

8. The information indication method according to claim 7, wherein the transmitting, by the first terminal, the indication information at the target position of the sidelink resource comprises:
transmitting, by the first terminal, the indication information at the target position of the sidelink resource, in the case that the enabling status information indicates that the operation status of the enabling switch is the enabled status.

9. The information indication method according to claim 7, wherein prior to the transmitting, by the first terminal, the enabling status information to the second terminal through the sidelink interface, the method further comprises:
determining the enabling status information by the first terminal, according to a terminal implementation requirement;
or,
determining the enabling status information by the first terminal, according to an RRC state of the first terminal at a Uu interface.

10. The information indication method according to claim 9, wherein the determining the enabling status information by the first terminal, according to the RRC state of the first terminal at the Uu interface comprises:
obtaining, by the first terminal, the enabling status information transmitted by a network-side device through the Uu interface, in the case that the first terminal is in an RRC connected state at the Uu interface;
or,
receiving, by the first terminal through the Uu interface, a system information block transmitted by the network-side device, and determining, by the first terminal, the enabling status information according to enabling status information carried in the system information block, in the case that the first terminal is in an RRC idle state or RRC inactive state at the Uu interface;
or,
determining, by the first terminal according to pre-configured information, the enabling status information, in the case that the first terminal is in an RRC out-of-coverage state at the Uu interface.

11. An information indication method, comprising:
monitoring, by a second terminal at a target position of a sidelink resource, indication information transmitted by a first terminal;
in the case that the monitored indication information indicates that the second terminal needs to enter a DRX active time or a DTX active time, activating, by the second terminal, a DRX inactivity timer or a DTX inactivity timer corresponding to a sidelink interface;
in the case that the monitored indication information indicates that the second terminal needs to perform a DRX configuration change or a DTX configuration change, performing, by the second terminal, the DRX configuration change or the DTX configuration change;
in the case that the monitored indication information indicates identification information of a DRX configuration for the second terminal to be used after the DRX configuration is changed, or identification information of a DTX configuration for the second terminal to be used after the DTX configuration is changed, changing, by the second terminal, to the DRX configuration or the DTX configuration indicated by the identification information;
wherein the first terminal is communicating with the second terminal through the sidelink interface.

12. The information indication method according to claim 11, wherein prior to the monitoring, by the second terminal at the target position of the sidelink resource, the indication information transmitted by the first terminal, the method further comprises:
determining the target position by the second terminal, according to a predetermined protocol; or,
determining the target position by the second terminal, according to target position indication information transmitted by the first terminal and received through the sidelink interface.

13. The information indication method according to claim 11, wherein prior to the monitoring, by the second terminal at the target position of the sidelink resource, the indication information transmitted by the first terminal, the method further comprises:
determining the target position by the second terminal, according to a terminal implementation requirement; or,
determining the target position by the second terminal, according to a radio resource control (RRC) state of the second terminal at a Uu interface.

14. The information indication method according to claim 13, wherein the determining the target position by the second terminal, according to the RRC state of the second terminal at the Uu interface comprises:
determining the target position by the second terminal, according to target position indication information transmitted by a network-side device and received through the Uu interface, in the case that the second terminal is in an RRC connected state at the Uu interface; or,
determining the target position by the second terminal, according to a system information block transmitted by the network-side device and received through the Uu interface, in the case that the second terminal is in an RRC idle state or RRC inactive state at the Uu interface, wherein the system information block carries the target position indication information; or,
determining the target position by the second terminal, according to pre-configured information, in the case that the second terminal is in an RRC out-of-coverage state at the Uu interface.

15. The information indication method according to claim 11, wherein the monitoring, by the second terminal at the target position of the sidelink resource, the indication information transmitted by the first terminal comprises:
monitoring, by the second terminal at the target position of the sidelink resource, the indication information transmitted by the first terminal, in the case that the second terminal is in a DRX inactive time or DTX inactive time.

16. The information indication method according to claim 11, further comprising:
transmitting, by the second terminal, enabling status information to the first terminal through the sidelink interface, in the case that the second terminal is in the DRX active time or DTX active time;
or,
receiving, by the second terminal, enabling status information transmitted by the first terminal through the sidelink interface, in the case that the second terminal is in the DRX active time or DTX active time;
wherein the enabling status information is used for indicating an operation status of an enabling switch, and the operation status of the enabling switch comprises: an enabled status or a disabled status.

17. The information indication method according to claim 16, wherein the monitoring, by the second terminal at the target position of the sidelink resource, the indication information transmitted by the first terminal comprises:
monitoring, by the second terminal at the target position of the sidelink resource, the indication information transmitted by the first terminal, in the case that the enabling status information indicates that the operation status of the enabling switch is the enabled status.

18. The information indication method according to claim 16, wherein prior to the transmitting, by the second terminal, the enabling status information to the first terminal through the sidelink interface, the method further comprises:
determining the enabling status information by the second terminal, according to a terminal implementation requirement;
or,
determining the enabling status information by the second terminal, according to an RRC state of the second terminal at a Uu interface.

19. The information indication method according to claim 18, wherein the determining the enabling status information by the second terminal, according to the RRC state of the second terminal at the Uu interface, comprises:
obtaining, by the second terminal, the enabling status information transmitted by a network-side device through the Uu interface, in the case that the second terminal is in an RRC connected state at the Uu interface;
or,
determining the enabling status information by the second terminal, according to a system information block transmitted by the network-side device and received through the Uu interface, in the case that the second terminal is in an RRC idle state or RRC inactive state at the Uu interface, wherein the system information block carries the enabling status information;
or,
determining the enabling status information by the second terminal, according to pre-configured information, in the case that the second terminal is in an RRC out-of-coverage state at the Uu interface.

20. An information indication apparatus, applied to a first terminal, comprising:
a first transmitting unit, configured to transmit indication information at a target position of a sidelink resource, wherein the indication information is used for indicating at least one of following information:
whether a second terminal needs to enter a discontinuous reception (DRX) active time;
whether the second terminal needs to enter a discontinuous transmission (DTX) active time;
whether the second terminal needs to perform a DRX configuration change;
whether the second terminal needs to perform a DTX configuration change;
identification information of a DRX configuration for the second terminal to be used after the DRX configuration is changed; or
identification information of a DTX configuration for the second terminal to be used after the DTX configuration is changed,
wherein the second terminal is communicating with the first terminal through a sidelink interface.

21. A terminal, the terminal being a first terminal, and comprising a memory, a transceiver and a processor, wherein the memory is configured to store a computer program, the transceiver is configured to transmit and receive data under the control of the processor, and the processor is configured to read the computer program from the memory to implement the following operations:
transmitting indication information at a target position of a sidelink resource, wherein the indication information is used for indicating at least one of following information:
whether a second terminal needs to enter a discontinuous reception (DRX) active time;
whether the second terminal needs to enter a discontinuous transmission (DTX) active time;
whether the second terminal needs to perform a DRX configuration change;
whether the second terminal needs to perform a DTX configuration change;
identification information of a DRX configuration for the second terminal to be used after the DRX configuration is changed; or
identification information of a DTX configuration for the second terminal to be used after the DTX configuration is changed,
wherein the second terminal is communicating with the first terminal through a sidelink interface.

22. An information indication apparatus, applied to a second terminal, comprising:
a monitoring unit, configured to monitor, at a target position of a sidelink resource, indication information transmitted by a first terminal;
a processing unit, configured to: in the case that the monitored indication information indicates that the second terminal needs to enter a DRX active time or a DTX active time, activate a DRX inactivity timer or a DTX inactivity timer corresponding to a sidelink interface; or configured to: in the case that the monitored indication information indicates that the second terminal needs to perform a DRX configuration change or a DTX configuration change, perform the DRX configuration change or the DTX configuration change; or configured to: in the case that the monitored indication information indicates identification information of a DRX configuration for the second terminal to be used after the DRX configuration is changed or identification information of a DTX configuration for the second terminal to be used after the DTX configuration is changed, change to the DRX configuration or the DTX configuration indicated by the identification information;
wherein the first terminal is communicating with the second terminal through the sidelink interface.

23. A terminal, the terminal being a second terminal, and comprising a memory, a transceiver and a processor, wherein the memory is configured to store a computer program, the transceiver is configured to transmit and receive data under the control of the processor, and the processor is configured to read the computer program from the memory to implement the following operations:
monitoring, at a target position of a sidelink resource, indication information transmitted by a first terminal;
in the case that the monitored indication information indicates that the second terminal needs to enter a DRX active time or a DTX active time, activating a DRX inactivity timer or a DTX inactivity timer corresponding to a sidelink interface;
in the case that the monitored indication information indicates that the second terminal needs to perform a DRX configuration change or a DTX configuration change, performing the DRX configuration change or the DTX configuration change;
in the case that the monitored indication information indicates identification information of a DRX configuration for the second terminal to be used after the DRX configuration is changed or identification information of a DTX configuration for the second terminal to be used after the DTX configuration is changed, changing to the DRX configuration or the DTX configuration indicated by the identification information;
wherein the first terminal is communicating with the second terminal through the sidelink interface.

24. A processor-readable storage medium, storing a computer program, wherein the computer program is configured to be executed by a processor to implement the method according to any one of claims 1 to 10, or to implement the method according to any one of claims 11 to 19.
